# EUROPEAN PATENT APPLICATION

(11) **EP 4 521 853 A1**
(43) Date of publication of application: **12.03.2025**
(21) Application number: 24186641.7
(22) Date of filing: 13.02.2019
(51) Int. Cl.: H04W 88/06, H04W 4/46, H04W 36/00, H04W 76/14, H04W 80/00

(54) **COMMUNICATION METHOD, FIRST TERMINAL DEVICE, AND SECOND TERMINAL DEVICE**

(30) Priority: 13.02.2018 CN 201810150307
(62) Divisional of application: 19754228.5
(71) Applicant: Huawei Technologies Co., Ltd., Shenzhen, Guangdong 518129 (CN)
(72) Inventor: WU, Yizhen, Shenzhen, 518129 (CN); ZHU, Yuanping, Shenzhen, 518129 (CN); HUANG, Yada, Shenzhen, 518129 (CN); DAI, Mingzeng, Shenzhen, 518129 (CN); WANG, Jun, Shenzhen, 518129 (CN)
(74) Representative: Pfenning, Meinig & Partner mbB

(57) **Abstract**

This application provides a communication method, a first terminal device, and a second terminal device. The method includes: transmitting, by a first terminal device, a first data packet to a second terminal device through a first interface, where the first interface is an interface for direct communication between the first terminal device and the second terminal device; and transmitting, by the first terminal device, a second data packet to the second terminal device through a second interface, where the second interface is any one of the following interfaces: an interface for communication between the first terminal device and an LTE network device, an interface for communication between the first terminal device and an NR network device, the interface for direct communication between the first terminal device and the second terminal device, an interface for direct communication between the first terminal device and a relay terminal device in the LTE standard, and an interface for direct communication between the first terminal device and the relay terminal device in the NR standard. This improves performance of transmitting a data packet between the first terminal device and the second terminal device.

## Description

This application claims priority to Chinese Patent Application No. 201810150307.8, filed with the Chinese Patent Office on February 13, 2018 and entitled "COMMUNICATION METHOD, FIRST TERMINAL DEVICE, AND SECOND TERMINAL DEVICE", which is incorporated herein by reference in its entirety.

### TECHNICAL FIELD

This application relates to the communications field, and more specifically, to a communication method, a first terminal device, and a second terminal device.

### BACKGROUND

In a communications system, to further improve user experience, a higher requirement is posed to improve data packet transmission performance. For example, in the internet of vehicles that supports V2X (Vehicle to Everything) communication, it is very important to improve data packet transmission performance.

The internet of vehicles is an integrated network. In the internet of vehicles, information about vehicles, roads, and environments is collected by using a wireless communications technology and the like, and intelligent collaboration and cooperation between a vehicle and infrastructure is implemented through vehicle-to-vehicle (Vehicle to vehicle, V2V) and vehicle-to-route (Vehicle to route, V2R) information exchange and sharing, so that intelligent transportation management control, intelligent vehicle control, and an intelligent dynamic information service are implemented. Through the internet of vehicles, a vehicle-mounted terminal may send sensor information or a control message to a surrounding vehicle-mounted terminal, so as to implement self-driving or orchestration driving of a vehicle.

In another communications system such as the internet of vehicles, a data packet may be directly transmitted between terminal devices through a direct connection interface without a need of participation of a network device. However, performance of transmitting a data packet through the foregoing direct connection interface is limited. To be specific, efficiency of transmitting a data packet through the foregoing direct connection interface limits performance of transmitting a data packet by a first terminal device to a second terminal device.

### SUMMARY

This application provides a communication method, a terminal device, and a network device, to improve performance of transmitting a data packet by a first terminal device to a second terminal device.

According to a first aspect, a communication method is provided, and includes: transmitting, by a first terminal device, a first data packet to a second terminal device through a first interface, where the first interface is a communications interface for direct communication between the first terminal device and the second terminal device in a long term evolution LTE standard, or a communications interface for direct communication between the first terminal device and the second terminal device in a new radio NR standard; and transmitting, by the first terminal device, a second data packet to the second terminal device through a second interface, where the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.

In this embodiment of this application, the second interface is used to help the first terminal device transmit a data packet to the second terminal device, so as to prevent the first terminal device from transmitting a data packet to the second terminal device through only one interface in the prior art, thereby improving performance of transmitting a data packet between the first terminal device and the second terminal device.

Further, reliability of transmitting a data packet through a communications interface for communication between a terminal device and a network device is better than reliability of transmitting a data packet through a direct connection interface for communication between terminal devices. Therefore, when the second interface is the communications interface for communication between the first terminal device and the LTE network device or the communications interface for communication between the first terminal device and the NR network device, reliability of transmitting a data packet by the first terminal device to the second terminal device can be further improved.

Optionally, the first interface may be the foregoing mentioned direct connection interface for direct communication between terminal devices, for example, a device-to-device (Device to device, D2D) interface, or a PC5 interface in the internet of vehicles.

The second interface may be the foregoing mentioned direct connection interface for direct communication between terminal devices, for example, the D2D interface, or the PC5 interface in the internet of vehicles. When the second interface is a direct connection interface, the second interface may be a direct connection interface for direct communication between the first terminal device and the second terminal device, or the second interface may be a communications interface for direct communication between the first terminal device and the relay terminal device. In other words, the first terminal device transmits a data packet to the second terminal device through the direct connection interface for communication between the first terminal device and the relay terminal device.

Optionally, the first data packet is a D2D data packet transmitted by the first terminal device to the second terminal device.

With reference to the first aspect, in a possible implementation, the first data packet and the second data packet are a same data packet in one data flow.

In this embodiment of this application, one to-be-transmitted data packet is replicated to obtain two data packets, that is, the first data packet and the second data packet, and the two data packets are respectively transmitted through the first interface and the second interface. Compared with a prior-art solution in which transmission is performed through only one interface, this improves data packet transmission reliability.

With reference to the first aspect, in a possible implementation, the first data packet and the second data packet are different data packets in one data flow.

In this embodiment of this application, different data packets that belong to one data flow are separately transmitted through the first interface and the second interface. Compared with the prior art in which the first data packet and the second data packet are transmitted through only one interface, this shortens a delay of transmitting the first data packet and the second data packet.

With reference to the first aspect, in a possible implementation, the first data packet and the second data packet are converged by a same target protocol layer entity in the second terminal device.

With reference to the first aspect, in a possible implementation, a first routing layer is configured in the first terminal device, and the first routing layer is located between a packet data convergence protocol PDCP layer of the first terminal device and a radio link control RLC protocol layer of the first terminal device. Before the transmitting, by the first terminal device, a second data packet to the second terminal device through a second interface, the method further includes: adding, by the first terminal device, a first routing header to a second protocol data unit PDU at the first routing layer, where the second PDU is a PDU of the second data packet at the PDCP layer of the first terminal device, and the first routing header is used to indicate a path for transmitting the second data packet.

In this embodiment of this application, the second data packet is transmitted at a routing layer of the first terminal device and a routing layer of the network device. After receiving the second data packet, the network device may directly forward the second data packet to the second terminal device based on the first routing header. This shortens a delay generated when the second data packet is transmitted, and avoids a case in which a data packet transmission delay is increased because the network device transmits the second data packet to a core network.

In addition, convergence is performed on a first PDU based on a function of a PDCP layer in an existing protocol, so as to modify an existing protocol stack less.

With reference to the first aspect, in a possible implementation, a first adaptation layer is configured in the first terminal device, and the first adaptation layer is located between the PDCP layer of the first terminal device and the RLC layer of the first terminal device. Before the transmitting, by a first terminal device, a first data packet to a second terminal device through a first interface, the method further includes: adding, by the first terminal device, a first convergence identifier to a first PDU at the first adaptation layer, where the first PDU is a PDU of the first data packet at the PDCP layer of the first terminal device, and the first convergence identifier is used to indicate to perform data convergence for the first data packet on the target protocol layer entity.

In this embodiment of this application, the first terminal device may add the first convergence identifier to the first PDU at the adaptation layer, so that the second terminal device performs convergence on the first PDU based on the first convergence identifier. Compared with a solution of replacing an adaptation layer through configuration by the network device, this reduces interaction between the first terminal device and the network device, and reduces signaling transmission overheads.

With reference to the first aspect, in a possible implementation, before the transmitting a first data packet to a second terminal device through a first interface, the method further includes: receiving, by the first terminal device, first configuration information sent by a network device, where the first configuration information is used to configure the first terminal device to transmit the first data packet through the first interface and transmit the second data packet through the second interface.

In this embodiment of this application, the network device configures, by using the first configuration information, the first terminal device to transmit the first data packet through the first interface and transmit the second data packet through the second interface. Compared with a solution of adding an adaptation layer to the first terminal device and the second terminal device, protocol stacks in the first terminal device and the second terminal device are modified less.

With reference to the first aspect, in a possible implementation, the first configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

With reference to the first aspect, in a possible implementation, a first convergence layer and a second routing layer are configured in the first terminal. Before the transmitting, by the first terminal device, a second data packet to the second terminal device through a second interface, the method further includes: obtaining, by the first terminal device, a third PDU from the first convergence layer, where the third PDU is a PDU of the second data packet at the first convergence layer; adding, by the first terminal device, a second routing header to the third PDU at the second routing layer, where the third PDU is a PDU of the second data packet at the first convergence layer, and the second routing header is used to indicate a path for transmitting the second data packet; and transmitting, by the first terminal device to a PDCP layer of the first terminal, the third PDU that carries the second routing header.

In this embodiment of this application, convergence is performed on the third PDU by adding a convergence layer to the first terminal device, so as to reduce a process of processing the third PDU at the PDCP layer, and reduce complexity of processing the third PDU at the PDCP layer.

With reference to the first aspect, in a possible implementation, a second adaptation layer is configured in the first terminal. Before the transmitting, by a first terminal device, a first data packet to a second terminal device through a first interface, the method further includes: obtaining, by the first terminal device, a fourth PDU from the first convergence layer, where the fourth PDU is a PDU of the first data packet at the first convergence layer; adding, by the first terminal device, a third convergence identifier to the fourth PDU at the second adaptation layer, where the third convergence identifier is used to indicate a data flow to which the first data packet belongs; and transmitting, by the first terminal device to the PDCP layer of the first terminal, the fourth PDU that carries the third convergence identifier.

In this embodiment of this application, the first terminal device may add the third convergence identifier to the fourth PDU at the adaptation layer, so that the second terminal device performs convergence on the fourth PDU based on the third convergence identifier. Compared with a solution in which the adaptation layer is replaced by configuring the network device, this reduces an interaction process between the first terminal device and the network device, reduces the overhead caused by signaling transmission.

With reference to the first aspect, in a possible implementation, before the transmitting a first data packet to a second terminal device through a first interface, the method further includes: receiving, by the first terminal device, second configuration information sent by a network device, where the second configuration information is used to configure the first terminal device to transmit the first data packet through the first interface and transmit the second data packet through the second interface.

In this embodiment of this application, the network device configures, by using the second configuration information, the first terminal device, to transmit the first data packet through the first interface and transmit the second data packet through the second interface. Compared with a solution of adding an adaptation layer to the first terminal device and the second terminal device, protocol stacks in the first terminal device and the second terminal device are modified less.

With reference to the first aspect, in a possible implementation, the second configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

With reference to the first aspect, in a possible implementation, before the transmitting, by a first terminal device, a first data packet to a second terminal device through a first interface, the method further includes: receiving, by the first terminal device, multi-interface transmission indication information sent by the network device, where the multi-interface transmission indication information is used to indicate the first terminal device to transmit the first data packet and the second data packet to the second terminal device through the two interfaces; and/or the multi-interface transmission indication information is further used to indicate whether data carried in the first data packet is the same as data carried in the second data packet.

With reference to the first aspect, in a possible implementation, before the receiving, by the first terminal device, multi-interface transmission indication information sent by the network device, the method further includes: sending, by the first terminal device, a multi-interface transmission request to the network device, where the multi-interface transmission request is used to request the network device to transmit the first data packet and the second data packet to the second terminal device through a multi-interface.

With reference to the first aspect, in a possible implementation, the receiving, by the first terminal device, multi-interface transmission indication information sent by the network device includes: receiving, by the first terminal device, a system information block SIB sent by the network device, where the SIB carries the multi-interface transmission indication information; or receiving, by the first terminal device, dedicated signaling sent by the network device, where the dedicated signaling carries the multi-interface transmission indication information.

According to a second aspect, a communication method is provided, and includes: receiving, by a second terminal device through a first interface, a first data packet sent by a first terminal device, where the first interface is a communications interface for direct communication between the first terminal device and the second terminal device in a long term evolution LTE standard, or a communications interface for direct communication between the first terminal device and the second terminal device in a new radio NR standard; and receiving, by the second terminal device through a second interface, a second data packet sent by the first terminal device, where the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.

In this embodiment of this application, the second interface is used to help the first terminal device transmit a data packet to the second terminal device, so as to prevent the first terminal device from transmitting a data packet to the second terminal device through only one interface in the prior art, thereby improving performance of transmitting a data packet between the first terminal device and the second terminal device.

Further, reliability of transmitting a data packet through a communications interface for communication between a terminal device and a network device is better than reliability of transmitting a data packet through a direct connection interface for communication between terminal devices. Therefore, when the second interface is the communications interface for communication between the first terminal device and the LTE network device or the communications interface for communication between the first terminal device and the NR network device, reliability of transmitting a data packet by the first terminal device to the second terminal device can be further improved.

Optionally, the first interface may be the foregoing mentioned direct connection interface for direct communication between terminal devices, for example, a device-to-device (Device to device, D2D) interface, or a PC5 interface in the internet of vehicles.

The second interface may be the foregoing mentioned direct connection interface for direct communication between terminal devices, for example, the D2D interface, or the PC5 interface in the internet of vehicles. When the second interface is a direct connection interface, the second interface may be a direct connection interface for direct communication between the first terminal device and the second terminal device, or the second interface may be a communications interface for direct communication between the first terminal device and the relay terminal device. In other words, the first terminal device transmits a data packet to the second terminal device through the direct connection interface for communication between the first terminal device and the relay terminal device.

Optionally, the first data packet is a D2D data packet transmitted by the first terminal device to the second terminal device.

With reference to the second aspect, in a possible implementation, the first data packet and the second data packet are a same data packet in one data flow.

In this embodiment of this application, one to-be-transmitted data packet is replicated to obtain two data packets, that is, the first data packet and the second data packet, and the two data packets are respectively transmitted through the first interface and the second interface. Compared with a prior-art solution in which transmission is performed through only one interface, this improves data packet transmission reliability.

With reference to the second aspect, in a possible implementation, the first data packet and the second data packet are different data packets in one data flow.

In this embodiment of this application, different data packets that belong to one data flow are separately transmitted through the first interface and the second interface. Compared with the prior art in which the first data packet and the second data packet are transmitted through only one interface, this shortens a delay of transmitting the first data packet and the second data packet.

With reference to the second aspect, in a possible implementation, the first data packet and the second data packet are converged by a same target protocol layer entity in the second terminal device.

With reference to the second aspect, in a possible implementation, the target protocol layer entity is a packet data convergence protocol PDCP entity, a first routing layer is configured in the second terminal device, and the first routing layer is located between a PDCP layer of the second terminal device and a radio link control RLC protocol layer of the second terminal device. The receiving, by the second terminal device through a second interface, a second data packet sent by the first terminal device includes: decapsulating, by the second terminal device at the first routing layer, a second protocol data unit PDU that carries a first routing header, and transmitting the second PDU to the PDCP entity, where the second PDU is a PDU of the second data packet at a PDCP layer of the first terminal device, and the first routing header is used to indicate a path for transmitting the second data packet.

In this embodiment of this application, convergence is performed on the second PDU by using a function of performing convergence, repeated detection, and repeated discarding on the second PDU at the PDCP layer of the second terminal device. Therefore, an existing protocol stack is modified less.

In this embodiment of this application, the second data packet is transmitted at a routing layer of the second terminal device and the network device. After receiving the second data packet, the network device may directly forward the second data packet to the second terminal device based on the first routing header. This shortens a delay generated when the second data packet is transmitted, and avoids a case in which a data packet transmission delay is increased because the network device transmits the second data packet to a core network.

With reference to the second aspect, in a possible implementation, a first adaptation layer is configured in the second terminal device, and the first adaptation layer is located between the PDCP layer of the second terminal device and the RLC layer of the second terminal device. The receiving, by a second terminal device through a first interface, a first data packet sent by a first terminal device includes: transmitting, by the second terminal device based on a first convergence identifier carried in a first PDU, the first PDU to the PDCP entity at the first adaptation layer, where the first PDU is a PDU of the first data packet at the PDCP layer of the first terminal device, and the first convergence identifier is used to indicate to perform data convergence for the first data packet on the target protocol layer entity.

In this embodiment of this application, the second terminal device performs convergence on the first PDU based on the first convergence identifier. Compared with a solution of replacing an adaption layer through configuration by the network device, this reduces interaction between the first terminal device and the network device, and reduces signaling transmission overheads.

With reference to the second aspect, in a possible implementation, before the receiving, by a second terminal device through a first interface, a first data packet sent by a first terminal device, the method further includes: receiving, by the second terminal device, first configuration information sent by a network device, where the first configuration information is used to configure the first terminal device to transmit the first data packet through the first interface and transmit the second data packet through the second interface.

In this embodiment of this application, the network device configures, by using the first configuration information, the second terminal device to receive the first data packet through the first interface and receive the second data packet through the second interface. Compared with a solution of adding an adaptation layer to the first terminal device and the second terminal device, protocol stacks in the first terminal device and the second terminal device are modified less.

With reference to the second aspect, in a possible implementation, the first configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

With reference to the second aspect, in a possible implementation, a first convergence layer and a second routing layer are configured in the second terminal device, and the target protocol layer entity is a first convergence entity at the first convergence layer. The receiving, by the second terminal device through a second interface, a second data packet sent by the first terminal device includes: obtaining, by the second terminal device, a third PDU from a PDCP layer of the second terminal device, where the third PDU is a PDU of the second data packet at a PDCP layer of the first terminal device; decapsulating, by the second terminal device at the second routing layer, the third PDU that carries a second routing header, and transmitting the third PDU to the first convergence entity, where the second routing header is used to indicate a path for transmitting the second data packet; and converging, by the second terminal device, the second data packet at the first convergence layer through the first convergence entity.

In this embodiment of this application, convergence is performed on the third PDU by adding a convergence layer to the second terminal device, so as to reduce a process of processing the third PDU at the PDCP layer, and reduce complexity of processing the third PDU at the PDCP layer.

With reference to the second aspect, in a possible implementation, a second adaptation layer is configured in the second terminal device. The receiving, by a second terminal device through a first interface, a first data packet sent by a first terminal device includes: obtaining, by the second terminal device, a fourth PDU from the PDCP layer of the second terminal device, where the fourth PDU is a PDU of the first data packet at the PDCP layer of the first terminal device; transmitting, by the second terminal device at the second adaptation layer, the fourth PDU to the first convergence entity based on a third convergence identifier carried in the fourth PDU, where the third convergence identifier is used to indicate a data flow to which the first data packet belongs; and performing, by the second terminal device, data convergence on the first data packet at the first convergence layer through the first convergence entity.

In this embodiment of this application, the second terminal device may perform data convergence for the fourth PDU at the adaptation layer based on the third convergence identifier. Compared with a solution of replacing an adaptation layer through configuration by the network device, this reduces interaction between the first terminal device and the network device, and reduces signaling transmission overheads.

With reference to the second aspect, in a possible implementation, before the receiving, through a first interface, a first data packet transmitted by a first terminal device, the method further includes: receiving, by the second terminal device, second configuration information sent by a network device, where the second configuration information is used to configure the first terminal device to transmit the first data packet through the first interface and transmit the second data packet through the second interface.

In this embodiment of this application, the network device configures, by using the second configuration information, the first terminal device to transmit the first data packet through the first interface and transmit the second data packet through the second interface. Compared with a solution of adding an adaptation layer to the first terminal device and the second terminal device, protocol stacks in the first terminal device and the second terminal device are modified less.

With reference to the second aspect, in a possible implementation, the second configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

According to a third aspect, a communication method is provided, and includes: sending, by a network device, multi-interface transmission indication information to a first terminal device, where the multi-interface transmission indication information is used to indicate the first terminal device to transmit a first data packet and a second data packet to the second terminal device by using a multi-interface; and/or the multi-interface transmission indication information is further used to indicate whether data carried in the first data packet is the same as data carried in the second data packet.

In this embodiment of this application, the network device configures, for the first terminal device, a function of transmitting a data packet by using a multi-interface. This improves performance of transmitting the first data packet and the second data packet by the first terminal device.

Optionally, the first data packet and the second data packet are a same data packet in one data flow.

Optionally, the first data packet and the second data packet are different data packets in one data flow.

With reference to the third aspect, in a possible implementation, before the sending, by a network device, multi-interface transmission indication information to a first terminal device, the method further includes: receiving, by the network device, a multi-interface transmission request sent by the first terminal device, where the multi-interface transmission request is used to request the network device to transmit the first data packet and the second data packet to the second terminal device through the multi-interface.

With reference to the third aspect, in a possible implementation, the receiving, by the network device, a multi-interface transmission request sent by the first terminal device includes: receiving, by the network device, a system information block SIB sent by the first terminal device, where the SIB carries the multi-interface transmission indication information; or receiving, by the network device, dedicated signaling sent by the first terminal device, where the dedicated signaling carries the multi-interface transmission indication information.

With reference to the third aspect, in a possible implementation, the multi-interface include a first interface and a second interface, and the method further includes: sending, by the network device, first configuration information to the first terminal device, where the first configuration information is used to configure the first terminal device to transmit the first data packet through the first interface and transmit the second data packet through the second interface.

With reference to the third aspect, in a possible implementation, the first configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

According to a fourth aspect, a first terminal device is provided, and the first terminal device includes modules configured to perform the first aspect or any possible implementation of the first aspect.

According to a fifth aspect, a second terminal device is provided, and the second terminal device includes modules configured to perform the second aspect or any possible implementation of the second aspect.

According to a sixth aspect, a network device is provided, and the network device includes modules configured to perform the third aspect or any possible implementation of the third aspect.

According to a seventh aspect, a first terminal device is provided, and the terminal device has functions of the terminal device in the foregoing method designs in the first aspect. The functions may be implemented by hardware, or may be implemented by hardware executing corresponding software. The hardware or software includes one or more units corresponding to the functions.

According to an eighth aspect, a second terminal device is provided, and the terminal device has functions of the terminal device in the foregoing method designs in the second aspect. The functions may be implemented by hardware, or may be implemented by hardware executing corresponding software. The hardware or software includes one or more units corresponding to the functions.

According to a ninth aspect, a network device is provided, and the network device has functions of the network device in the foregoing method designs in the third aspect. The functions may be implemented by hardware, or may be implemented by hardware executing corresponding software. The hardware or software includes one or more units corresponding to the functions.

According to a tenth aspect, a first terminal device is provided, and includes a transceiver, a processor, and a memory. The processor is configured to control the transceiver to send and receive a signal, the memory is configured to store a computer program, and the processor is configured to invoke and run the computer program in the memory, so that the terminal device is enabled to perform the method in the first aspect.

According to an eleventh aspect, a second terminal device is provided, and includes a transceiver, a processor, and a memory. The processor is configured to control the transceiver to send and receive a signal, the memory is configured to store a computer program, and the processor is configured to invoke and run the computer program in the memory, so that the terminal device is enabled to perform the method in the second aspect.

According to a twelfth aspect, a second terminal device is provided, and includes a transceiver, a processor, and a memory. The processor is configured to control the transceiver to send and receive a signal, the memory is configured to store a computer program, and the processor is configured to invoke and run the computer program in the memory, so that the terminal device is enabled to perform the method in the second aspect.

According to a thirteenth aspect, a network device is provided, and includes a transceiver, a processor, and a memory. The processor is configured to control the transceiver to send and receive a signal, the memory is configured to store a computer program, and the processor is configured to invoke and run the computer program in the memory, so that the network device is enabled to perform the method in the third aspect.

According to a fourteenth aspect, a communications apparatus is provided. The communications apparatus may be the first terminal device in the foregoing method designs, or a chip disposed in the first terminal device. The communications apparatus includes a memory that is configured to store computer-executable program code, a communications interface, and a processor. The processor is coupled to the memory and the communications interface. The program code stored in the memory includes an instruction, and when the processor executes the instruction, the communications apparatus is enabled to perform the method performed by the terminal device in the first aspect or any possible design of the first aspect.

According to a fifteenth aspect, a communications apparatus is provided. The communications apparatus may be the second terminal device in the foregoing method designs, or a chip disposed in the second terminal device. The communications apparatus includes a memory that is configured to store computer-executable program code, a communications interface, and a processor. The processor is coupled to the memory and the communications interface. The program code stored in the memory includes an instruction, and when the processor executes the instruction, the communications apparatus is enabled to perform the method performed by the terminal device in the second aspect or any possible design of the second aspect.

According to a sixteenth aspect, a communications apparatus is provided. The communications apparatus may be the network device in the foregoing method designs, or a chip disposed in the network device. The communications apparatus includes a memory that is configured to store computer-executable program code, a communications interface, and a processor. The processor is coupled to the memory and the communications interface. The program code stored in the memory includes an instruction, and when the processor executes the instruction, the communications apparatus is enabled to perform the method performed by the network device in the third aspect or any possible design of the third aspect.

According to a seventeenth aspect, a computer program product is provided. The computer program product includes computer program code, and when the computer program code is run on a computer, the computer is enabled to perform the methods in the foregoing aspects.

According to an eighteenth aspect, a computer-readable medium is provided. The computer-readable medium stores program code, and when the computer program code is run on a computer, the computer is enabled to perform the methods in the foregoing aspects.

According to a nineteenth aspect, a chip system is provided. The chip system includes a processor that is used for supporting a first terminal device or a second terminal device to implement functions in the foregoing aspects, for example, generate, receive, send, or process data and/or information in the foregoing methods. In a possible design, the chip system further includes a memory, and the memory is configured to store a program instruction and data that are necessary for the first terminal device or the second terminal device. The chip system may include a chip, or may include a chip and another discrete device.

According to a twentieth aspect, a chip system is provided. The chip system includes a processor that is configured to support a network device in implementing functions in the foregoing aspects, for example, generate, receive, send, or process data and/or information in the foregoing methods. In a possible design, the chip system further includes a memory, and the memory is configured to store a program instruction and data that are necessary for the network device. The chip system may include a chip, or may include a chip and another discrete device.

According to a twenty-first aspect, a communications system is provided, and the communications system includes the foregoing first terminal device and the foregoing second terminal device.

### BRIEF DESCRIPTION OF DRAWINGS

FIG. 1 shows a wireless communications system 100 to which an embodiment of this application is applied;
FIG. 2 is a schematic flowchart of a communication method according to an embodiment of this application;
FIG. 3 is a schematic block diagram of an architecture of a protocol stack in a communications system according to an embodiment of this application;
FIG. 4 is a schematic block diagram of a PDU encapsulation structure according to an embodiment of this application;
FIG. 5 is a schematic block diagram of an architecture of a protocol stack in a communications system according to an embodiment of this application;
FIG. 6 is a schematic block diagram of an architecture of a protocol stack in a communications system according to another embodiment of this application;
FIG. 7 is a schematic block diagram of an architecture of a protocol stack in a communications system according to another embodiment of this application;
FIG. 8 is a schematic block diagram of a PDU encapsulation structure according to another embodiment of this application;
FIG. 9 is a schematic block diagram of an architecture of a protocol stack in a communications system according to an embodiment of this application;
FIG. 10 is a schematic block diagram of an architecture of a protocol stack in a communications system according to an embodiment of this application;
FIG. 11 is a schematic block diagram of an architecture of a protocol stack based on a dual-direct connection interface according to an embodiment of this application;
FIG. 12 is a schematic block diagram of an architecture of a protocol stack based on a dual-direct connection interface according to another embodiment of this application;
FIG. 13 is a schematic block diagram of a first terminal device according to an embodiment of this application;
FIG. 14 is a schematic block diagram of a first terminal device according to another embodiment of this application;
FIG. 15 is a schematic block diagram of a second terminal device according to an embodiment of this application; and
FIG. 16 is a schematic block diagram of a second terminal device according to another embodiment of this application.

### DESCRIPTION OF EMBODIMENTS

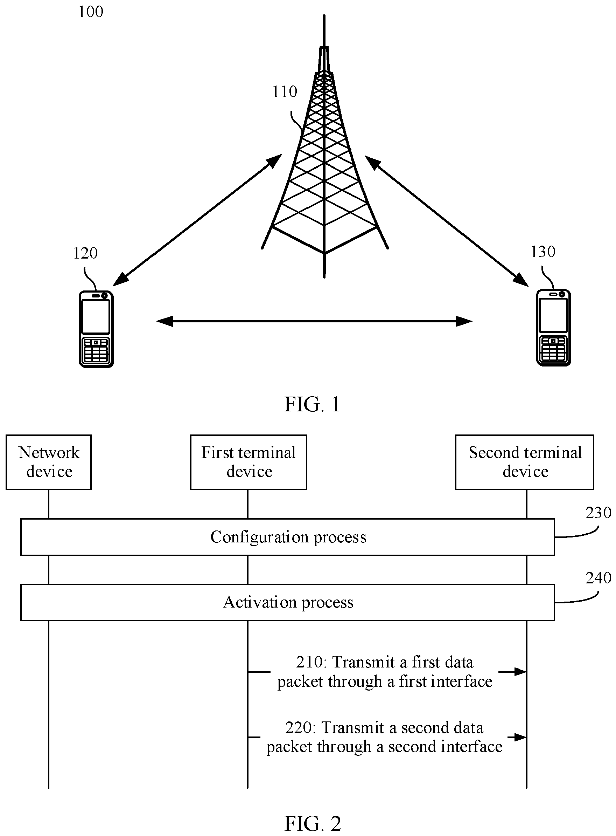

For ease of understanding, a scenario to which the embodiments of this application are applied is first described with reference to FIG. 1.

FIG. 1 shows a wireless communications system 100 to which an embodiment of this application is applied. The wireless communications system 100 may include a network device 110 and a terminal device. The network device 110 may be a device that communicates with the terminal device. The network device 110 may provide communication coverage for a specific geographical area, and may communicate with a terminal device located in the coverage area.

FIG. 1 schematically shows one network device and two terminals (a first terminal device 120 and a second terminal device 130). Optionally, the wireless communications system 100 may include a plurality of network devices, and a coverage area of each network device may include another quantity of terminals. This is not limited in this embodiment of this application.

Optionally, the wireless communications system 100 may further include another network entity such as a network controller or a mobility management entity. This is not limited in this embodiment of this application.

It should be understood that the technical solutions of this application may be applied to various communications systems, for example, a global system for mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, a long term evolution-advanced (Advanced long term evolution, LTE-A) system, a universal mobile telecommunications system (Universal Mobile Telecommunication System, UMTS), new radio (New Radio Access Technology, NR), and 5G.

It should be further understood that, in the embodiments of this application, the terminal may include but is not limited to a terminal device applied to the internet of vehicles, for example, may be a terminal device that accesses the internet of vehicles, such as a vehicle-mounted terminal device. The terminal may alternatively include but is not limited to a mobile station (Mobile Station, MS), a mobile terminal (Mobile Terminal), a mobile telephone (Mobile Telephone), user equipment (User Equipment, UE), a mobile phone (handset), portable equipment (portable equipment), and the like. The terminal device may communicate with one or more core networks by using a radio access network (Radio Access Network, RAN). For example, the terminal device may be a mobile phone (or referred to as a "cellular" phone) or a computer having a wireless communication function. Alternatively, the terminal device may be a portable, pocket-sized, handheld, computer built-in, or vehicle-mounted mobile apparatus.

In the embodiments of this application, the network device may be an access network device, for example, may be a base station, a transmission reception point (Transmit and Receive Point, TRP), or an access point. The base station may be a base transceiver station (Base Transceiver Station, BTS) in GSM or CDMA, or may be a NodeB (NodeB) in WCDMA, or may be an evolved NodeB (evolved Node B, eNB or e-NodeB) in LTE, or may be a gNodeB (gNB) in NR or 5G. This is not specifically limited in the embodiments of this application.

In the communications system 100 shown in FIG. 1, the first terminal device 120 may communicate with the second terminal device 130 through a direct connection interface. The direct connection interface may be understood as an air interface for direct communication between terminals, for example, may be a D2D interface, or a PC5 interface in the internet of vehicles. Data is transmitted between terminals through the foregoing direct connection interface, so that the network device does not need to participate in a data transmission process, thereby shortening a delay of data transmission between the terminal devices. However, because reliability of data transmission through the foregoing direct connection interface is not very high, reliability of data transmission between the terminal devices is not improved.

To improve reliability of data transmission between terminal devices, an embodiment of this application provides a communication method, to improve efficiency of data packet transmission between terminal devices.

The following describes the methods in the embodiments of this application with reference to accompanying drawings.

FIG. 2 is a schematic flowchart of a communication method according to an embodiment of this application. It should be understood that a first terminal device shown in FIG. 2 may be the first terminal device shown in FIG. 1 or a chip on the first terminal device, and a second terminal device may be the second terminal device shown in FIG. 1 or a chip on the second terminal device. The method shown in FIG. 2 includes step 210 to step 240.

210: The first terminal device transmits a first data packet to the second terminal device through a first interface, where the first interface is a communications interface for direct communication between the first terminal device and the second communications apparatus in a long term evolution LTE standard, or a communications interface for direct communication between the first terminal device and the second communications apparatus in a new radio NR standard.

Specifically, the first interface may be the above mentioned direct connection interface for direct communication between terminal devices, for example, a device-to-device (Device to device, D2D) interface or a PC5 interface in the internet of vehicles.

Optionally, the first data packet is a D2D data packet transmitted by the first terminal device to the second terminal device.

220: The first terminal device transmits a second data packet to the second communications apparatus through a second interface, where the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.

Specifically, the second interface may be the above mentioned direct connection interface for direct communication between terminal devices, for example, a D2D interface or a PC5 interface in the internet of vehicles.

When the second interface is a direct connection interface, the second interface may be a direct connection interface for direct communication between the first terminal device and the second terminal device, or the second interface may be a communications interface for direct communication between the first terminal device and the relay terminal device. In other words, the first terminal device transmits a data packet to the second terminal device through the direct connection interface for communication between the first terminal device and the relay terminal device.

It should be noted that the relay terminal device may include one or more terminal devices. This is not specifically limited in this embodiment of this application.

The second interface may alternatively be an interface for communication between the first terminal device and a network device, and is also referred to as an indirect connection interface, for example, a Uu interface. In other words, the first terminal device transmits a data packet to the second terminal device through the network device.

Optionally, when the second interface is an indirect connection interface, the second terminal device that receives the second data packet through the second interface may belong to a terminal device set. In other words, in a process in which the first terminal device transmits the second data packet through the second interface, the network device may help the first terminal device send the second data packet to the terminal device set in a multicast or broadcast manner. The terminal device set includes the second terminal device.

It should be noted that there may be specifically two communication scenarios in which the first terminal device transmits a data packet to the second terminal device through the network device.

Communication scenario 1: The first terminal device and the second terminal device belong to a same network device. In other words, when the first terminal device and the second terminal device access a same network device, the above mentioned network device that helps the first terminal device forward the second data packet to the second terminal device is the network device accessed by the first terminal device and the second terminal device.

Communication scenario 2: The first terminal device and the second terminal device belong to different network devices. For ease of distinguishing, a network device accessed by the first terminal device is referred to as a first network device, and a network device accessed by the second terminal device is referred to as a second network device. In this case, the above mentioned network device that helps the first terminal device forward the second data packet to the second terminal device may include the first network device and the second network device.

In this embodiment of this application, the first terminal device transmits a data packet to the second terminal device through the second interface, so as to prevent the first terminal device from transmitting a data packet to the second terminal device through only one interface in the prior art, thereby improving performance of transmitting a data packet between the first terminal device and the second terminal device.

Further, reliability of transmitting a data packet through a communications interface for communication between a terminal device and a network device is better than reliability of transmitting a data packet through a direct connection interface for communication between terminal devices. Therefore, when the second interface is the communications interface for communication between the first terminal device and the LTE network device or the communications interface for communication between the first terminal device and the NR network device, reliability of transmitting a data packet by the first terminal device to the second terminal device can be further improved.

Optionally, in an embodiment, the first data packet and the second data packet are a same data packet in one data flow.

Specifically, that the first data packet and the second data packet are a same data packet in one data flow may be understood as that the first data packet and the second data packet are a same data packet that originally needs be transmitted on one path through one interface. To be specific, the second data packet may be understood as a data packet generated by replicating the first data packet, or the first data packet may be understood as a data packet generated by replicating the second data packet.

In this embodiment of this application, one to-be-transmitted data packet is replicated to obtain two data packets, that is, the first data packet and the second data packet, and the first data packet and the second data packet are respectively transmitted through the first interface and the second interface. Compared with a prior-art solution in which transmission is performed through only one interface, data packet transmission reliability is improved.

Optionally, in an embodiment, the first data packet and the second data packet are different data packets in one data flow.

Specifically, that the first data packet and the second data packet are different data packets in one data flow may be understood as that the first data packet and the second data packet are different data packets that originally need be transmitted on one path through one interface.

In this embodiment of this application, different data packets that belong to one data flow are separately transmitted through the first interface and the second interface. Compared with the prior art in which the first data packet and the second data packet are transmitted through only one interface, a delay of transmitting the first data packet and the second data packet is shortened.

Optionally, in an embodiment, the first data packet and the second data packet are converged by a same target protocol layer entity in the second terminal device. To be specific, in the prior art, data packets are originally transmitted to a same target protocol layer entity on one path for convergence. However, in this embodiment of this application, although the data packets are separately transmitted through two different interfaces, the data packets are still converged by the same target protocol layer entity finally.

To send, to a same target protocol layer entity for convergence, data packets that are separately transmitted through two interfaces, this embodiment of this application improves an existing protocol stack, and provides a plurality of different protocol stacks. With reference to the accompanying drawings, the following describes an architecture of each protocol stack and a data packet transmission manner in detail.

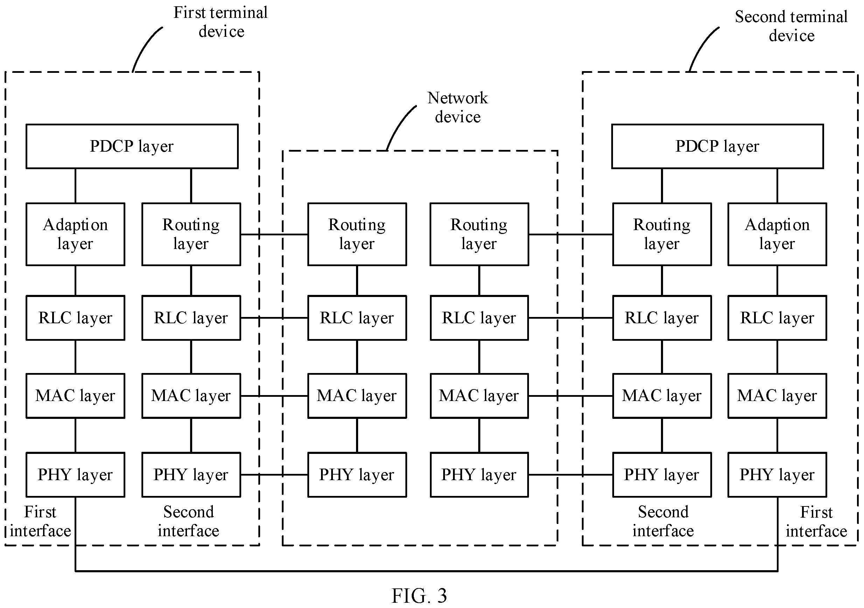

An architecture of a first-type protocol stack is applicable to the foregoing communication scenario 1. In addition, the first interface is a direct connection interface for communication between the first terminal device and the second terminal device, and the second interface is an indirect connection interface for communication between the first terminal device and the network device. An architecture of a protocol stack in each of the first terminal device, the second terminal device, and the network device is shown in FIG. 3.

FIG. 3 is a schematic block diagram of an architecture of a protocol stack in a communications system according to an embodiment of this application. It should be understood that FIG. 3 shows only protocol layers that are in the first terminal device, the second terminal device, and the network device and that are related to this embodiment of this application. The first terminal device, the second terminal device, and the network device may further include other protocol layers. This is not specifically limited in this embodiment of this application.

In the protocol stack architecture shown in FIG. 3, an adaptation layer (Adaption Layer) is added to a protocol stack architecture corresponding to a direct connection interface between the first terminal device and the second terminal device. The adaptation layer may be located between a PDCP layer and an RLC layer of the first terminal device. A routing layer (Routing Layer), also referred to as a "first routing layer", is added to a protocol stack architecture corresponding to an indirect connection interface between the first terminal device and the second terminal device. The routing layer may be located between the PDCP layer and the RLC layer of the first terminal device. The network device adds a routing layer (Routing Layer) to a protocol stack architecture corresponding to an indirect connection interface, and a location of the routing layer in the network device is the same as a location of the routing layer in the first terminal device.

With reference to the protocol stack architecture of the first interface shown in FIG. 3, the following describes a process of transmitting data packets through the first interface and the second interface. There may be two cases for a specific data packet transmission process. For ease of description, a protocol data unit (Protocol Data Unit, PDU) corresponding to the first data packet is referred to as a "first PDU", and a PDU corresponding to the second data packet is referred to as a "second PDU".

Case 1: The first data packet and the second data packet are a same data packet.

At the PDCP layer of the first terminal device, the first PDU is replicated to generate the second PDU. The second PDU and the first PDU may have a same PDCP sequence number (Sequence Number, SN). In addition, the first PDU is transmitted to the adaptation layer of the first terminal device, and the second PDU is transmitted to the routing layer of the first terminal device.

At the adaptation layer of the first terminal device, a first convergence identifier is added to the first PDU. The first convergence identifier is used to indicate to perform data convergence for the first data packet on the target protocol layer entity, or the first convergence identifier is used to indicate a protocol layer entity that performs convergence on the first data packet.

At the routing layer of the first terminal device, a first routing header and a second convergence identifier are added to the second protocol data unit PDU. The second PDU is a PDU of the second data packet at the PDCP layer of the first terminal device. The first routing header is used to indicate a path for transmitting the second data packet. The second convergence identifier is used to indicate to perform data convergence for the second data packet on the target protocol layer entity, or the second convergence identifier is used to indicate a protocol layer entity that performs convergence on the second data packet.

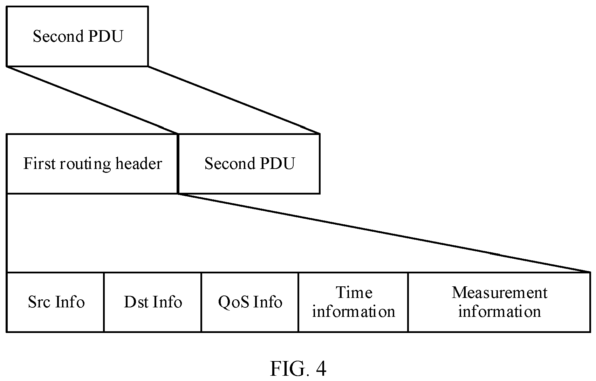

Optionally, adding the first routing header to the second PDU may be understood as encapsulating the second PDU according to a routing header (Routing-header) protocol. The first routing header may include source information (Source Information, Src Info) and destination information (destination Information, Dst Info). Optionally, the first routing header may further include at least one of quality of service requirement information (Quality of Service Information, QoS Info), time information (Time information, Time Info), and measurement information (Measurement information, Measurement Info). For a specific PDU encapsulation structure, refer to FIG. 4.

Specifically, the source information is used to indicate the first terminal device. Specifically, the source information may be address information of the first terminal device such as an internet protocol (Internet Protocol, IP) address or a media access control (Media Access Control, MAC) address, identification information of the first terminal device, or the like. The identification information of the first terminal device may be an international mobile subscriber identity (International Mobile Subscriber Identification Number, IMSI), a temporary identifier that may be allocated to the first terminal device to protect a privacy network, source terminal location information, or the like.

The destination information is used to indicate the second terminal device. Specifically, the destination information may be address information of the second terminal device, identification information of the second terminal device, or address information or identification information of a terminal device set including the second terminal device, for example, an IP multicast address corresponding to the terminal device set, a MAC multicast address corresponding to the terminal device set, or a group ID of the terminal device set that is allocated in a network.

The QoS information is used to determine a service level for transmitting the second PDU, and may be represented by using a priority.

The time information is used to indicate time information related to the second data packet, for example, a generation time of the second data packet, an expected sending time of the second data packet, and a latest sending time of the second data packet.

It should be noted that a process in which the first terminal device obtains the destination information may be indicated by the network device to the first terminal device, or may be obtained through negotiation between the first terminal device and the second terminal device. A manner in which the first terminal device obtains the destination information is not specifically limited in this embodiment of this application.

Then, the first PDU that carries the first convergence identifier and the second PDU that carries the first routing header and the second convergence identifier are respectively transmitted to different RLC entities at the RLC layer of the first terminal device.

It should be noted that a process of processing the first PDU and the second PDU at the RLC layer and a process of processing the first PDU and the second PDU below the RLC layer each are basically the same as a PDU transmission process in the prior art. For brevity, details are not described herein.

After receiving the second data packet through the second interface, the network device determines, at the routing layer in the network device by using the destination information carried in the second PDU, the second terminal device that receives the second data packet, and forwards the second data packet to the second terminal device.

After receiving the first data packet through the first interface, the second terminal device decapsulates, at an adaptation layer of the second terminal device, the first PDU that carries the first convergence identifier, and transmits, based on the first convergence identifier, the first PDU to a target protocol layer entity that performs convergence on the first PDU, that is, a PDCP entity.

After receiving the second data packet through the second interface, the second terminal device decapsulates, at a routing layer of the second terminal device, the second PDU that carries the second convergence identifier, and transmits, based on the second convergence identifier, the second PDU to the target protocol layer entity that performs convergence on the second PDU, that is, the PDCP entity.

The PDCP entity of the second terminal device converges the first PDU and the second PDU. When the first data packet and the second data packet are generated based on a same data packet, the PDCP entity may discard either of the first data packet and the second data packet.

It should be noted that the foregoing case 1 merely describes a case in which the second data packet is generated by replicating the first data packet. Alternatively, the first data packet may be generated by replicating the second data packet. Another specific transmission process is basically the same as that described above. For brevity, details are not described herein again.

In the protocol stack architecture shown in this embodiment of this application, based on a function of performing data packet convergence at a PDCP layer in an existing protocol stack, the first data packet and the second data packet that are received through the first interface and the second interface are converged, and the existing protocol stack is modified less.

Case 2: The first data packet and the second data packet are different data packets.

Specifically, at the PDCP layer of the first terminal device, two different data packets in one data flow, namely, the first data packet and the second data packet, are respectively transmitted to the adaptation layer of the first terminal device and the routing layer of the first terminal device. A sequence number of the first data packet is different from a PDCP sequence number of the second data packet.

It should be noted that a data packet transmission process in the foregoing case 1 is slightly different from a data packet transmission process in the foregoing case 2 only in terms of a step of whether to replicate the to-be-transmitted first data packet at the PDCP layer. In the case 2, the to-be-transmitted first data packet and the to-be-transmitted second data packet may be directly transmitted without a need of performing data packet replication at the PDCP layer. A process of transmitting the first data packet in the protocol stack corresponding to the first interface and a process of transmitting the second data packet in the protocol stack corresponding to the second interface each are the same as the process of transmitting a data packet in the protocol stack described in the foregoing case 1. For brevity, details are not described herein again.

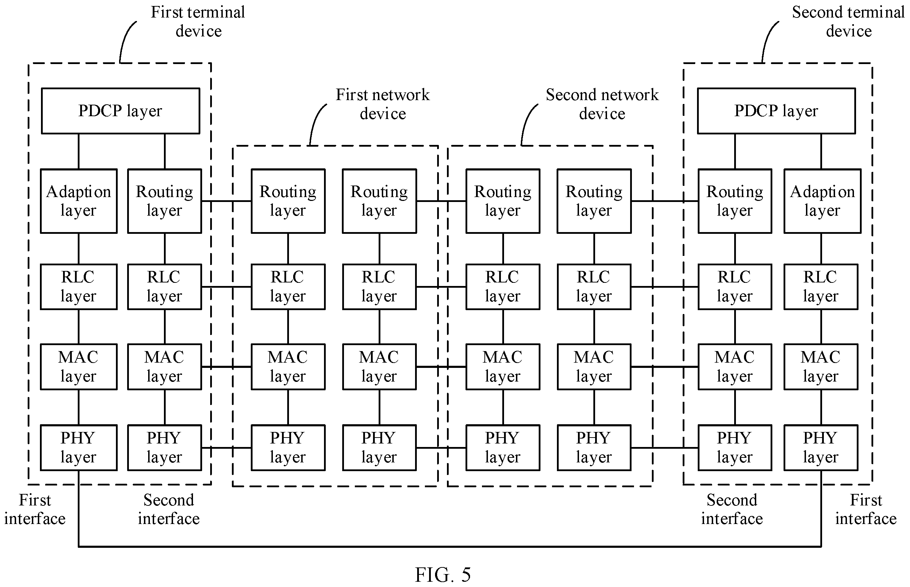

An architecture of a second-type protocol stack is applicable to the foregoing communication scenario 2. In addition, the first interface is a direct connection interface for communication between the first terminal device and the second terminal device, and the second interface is an indirect connection interface for communication between the first terminal device and the network device. FIG. 5 shows an architecture of a protocol stack in each of the first terminal device, the second terminal device, and the network device.

FIG. 5 is a schematic block diagram of an architecture of a protocol stack in a communications system according to an embodiment of this application. It should be understood that FIG. 5 shows only protocol layers that are in the first terminal device, the second terminal device, the first network device, and the second network device and that are related to this embodiment of this application. The first terminal device, the second terminal device, the first network device, and the second network device may further include other protocol layers. This is not specifically limited in this embodiment of this application.

The protocol stack architecture shown in FIG. 5 is basically the same as the protocol stack architecture shown in FIG. 3. For detailed descriptions, refer to the foregoing descriptions of the first-type protocol stack. The following specifically describes a difference between the protocol stack shown in FIG. 5 and the protocol stack shown in FIG. 3. In other words, the following specifically describes a process of transmitting the second data packet through an indirect connection interface between the first terminal device and the first network device.

The first terminal device accesses the first network device, and the second terminal device accesses the second network device. Therefore, in a process in which the first terminal device transmits the data packet to the second terminal device through the second interface, the data packet needs to be forwarded by the two network devices. To be specific, a routing layer needs to be separately configured on the first network device and the second network device, to forward the second packet to the second terminal device.

In a process of encapsulating a first routing header into a second PDU at a routing layer of the first terminal device, in addition to that the foregoing mentioned destination information used to indicate the second terminal device that receives the second data packet needs to be encapsulated, identification information of the second network device further needs to be encapsulated into the first routing header, and specifically identification information of the first network device may be further encapsulated. In other words, in a process of adding the first routing header to the second PDU at the routing layer of the first terminal device, routing information needs to be added to the first routing header. The routing information is used to indicate a routing device that may help the first terminal device forward the second data packet to the second terminal device. Specifically, the routing device may include the first network device and the second network device.

It should be noted that the identification information of the first network device to which the first terminal device belongs and the identification information of the second network device to which the second terminal device belongs may be obtained through negotiation between the first terminal device and the second terminal device.

In an architecture of a third-type protocol stack, through configuration by the network device, data packets in one data flow are transmitted through the first interface and the second interface.

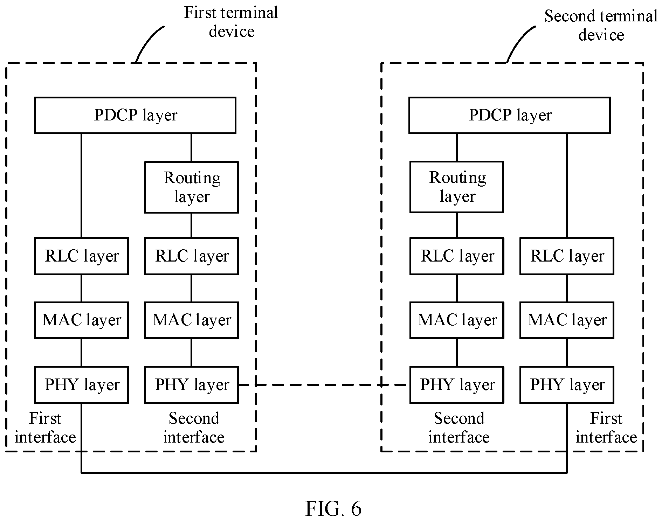

The third-type protocol stack may be understood as an improvement on the first-type protocol stack and the second-type protocol stack. Through configuration by the network device, an adaptation layer is replaced, and a first convergence identifier or a second convergence identifier is added to a routing layer. FIG. 6 is a schematic block diagram of an architecture of a protocol stack in a communications system according to another embodiment of this application. It should be understood that FIG. 6 merely shows an architecture of a protocol stack in each of the first terminal device and the second terminal device. An architecture of a protocol stack in a network device in the architecture of the third-type protocol stack is the same as the architecture of the protocol stack in the network device in the architecture of the second-type protocol stack and the architecture of the first-type protocol stack. For brevity, details are not described herein again.

In the protocol stack architecture shown in FIG. 6, the first terminal device transmits a first PDU obtained from a PDCP layer to an RLC entity corresponding to the first interface, and finally the first PDU is transmitted to the second terminal device through the first interface. The first terminal device transmits a second PDU obtained from the PDCP layer to a routing layer corresponding to the second interface, and adds a first routing header. Then the second PDU that carries the first routing header is transmitted to an RLC entity corresponding to the second interface, and finally the second PDU is transmitted to the second terminal device through the second interface.

Specifically, before step 210, the method further includes: receiving, by the first terminal device, first configuration information sent by the network device, where the first configuration information is used to configure the first terminal device to transmit the first data packet through the first interface and transmit the second data packet through the second interface.

It should be noted that, when the first terminal device and the second terminal device belong to a same network device, the network device that sends the first configuration information is the network device to which the first terminal device and the second terminal device belong. When the first terminal device and the second terminal device belong to different network devices, the network device that sends the first configuration information is the first network device accessed by the first terminal device.

It should be further understood that, when the first terminal device accesses the first network device and the second terminal device accesses the second network device, the first network device and the second network device determine, through negotiation, the first interface and the second interface that may be used by the first terminal device to transmit data packets to the second terminal device. Finally, the first network device may perform configuration for the first terminal device by using the first configuration information, and the second network device may perform configuration for the second terminal device by using third configuration information. A function of the third configuration information is the same as that of the first configuration information, and the third configuration information and the first configuration information may carry same indication information. Specific content of the indication information is described in detail below.

Optionally, the first configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

In this embodiment of this application, through configuration by the network device, the first interface and the second interface are used by the first terminal device to transmit data packets to the second terminal device, and therefore the adaptation layer does not need to be newly added to the protocol stack architecture. This reduces improvement on an existing protocol stack and reduce costs required for improving the protocol stack.

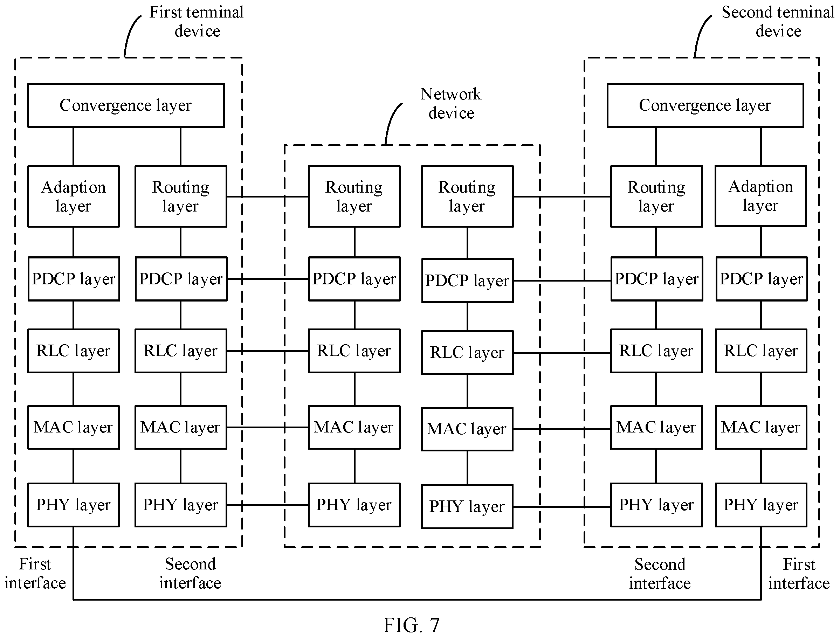

An architecture of a fourth-type protocol stack is applicable to the foregoing communication scenario 1. In addition, the first interface is a direct connection interface for communication between the first terminal device and the second terminal device, and the second interface is an indirect connection interface for communication between the first terminal device and the network device. FIG. 7 shows an architecture of a protocol stack in each of the first terminal device, the second terminal device, and the network device. Compared with the foregoing three types of protocol stack architectures, a design idea provided in this embodiment of this application is to perform operations at a PDCP layer, for example, split data packets transmitted through the first interface and the second interface in the first terminal device, and converge data packets transmitted through the first interface and the second interface in the second terminal device.

FIG. 7 is a schematic block diagram of an architecture of a protocol stack in a communications system according to another embodiment of this application. It should be understood that FIG. 7 shows only protocol layers that are in the first terminal device, the second terminal device, and the network device and that are related to this embodiment of this application. The first terminal device, the second terminal device, and the network device may further include other protocol layers. This is not specifically limited in this embodiment of this application.

In the protocol stack architecture shown in FIG. 7, a convergence layer (Convergence Layer) is added to each of the first terminal device and the second terminal device, an adaptation layer (Adaption Layer) is added to a protocol stack architecture corresponding to a direct connection interface between the first terminal device and the second terminal device, and a routing layer (Routing Layer), also referred to as a "second routing layer", is added to a protocol stack architecture corresponding to an indirect connection interface between the first terminal device and the second terminal device. The network device adds a routing layer (Routing Layer) to a protocol stack architecture corresponding to an indirect connection interface. Specifically, the adaptation layer and the routing layer in each of the first terminal device and the second terminal device may be located between the convergence layer and the PDCP layer, and the convergence layer, the adaptation layer, and the routing layer may be located between a service data adaptation protocol (Service Data Adaptation Protocol, SDAP) layer and the PDCP layer as a whole. In other words, the convergence layer is located between the SDAP layer and the routing layer.

The routing layer configured in the network device and the routing layer in the first terminal device may provide peer entities of the routing layers. In other words, the routing layer in the network device may be located above a PDCP layer of the network device, and may be specifically located between the PDCP layer of the network device and the SDAP layer of the network device.

With reference to the protocol stack architecture of the first interface shown in FIG. 7, the following describes a process of transmitting data packets through the first interface and the second interface. There may be two cases for a specific data packet transmission process. For ease of description, a protocol data unit (Protocol Data Unit, PDU) corresponding to the first data packet is referred to as a "third PDU", and a PDU corresponding to the second data packet is referred to as a "fourth PDU".

Case 1: The first data packet and the second data packet are a same data packet.

At the convergence layer of the first terminal device, the third PDU is replicated to generate the fourth PDU. The third PDU and the fourth PDU may be configured to have a same convergence layer sequence number (Sequence Number, SN). In addition, the third PDU is transmitted to the adaptation layer of the first terminal device, and the fourth PDU is transmitted to the routing layer of the first terminal device. A function of the convergence layer sequence number is similar to a function of a PDCP sequence number in the prior art. For example, the convergence layer sequence number may indicate a data packet convergence sequence, and may be used for repeated detection, repeated discarding, or the like.

At the adaptation layer of the first terminal device, a third convergence identifier is added to the third PDU. The third convergence identifier is used to indicate to perform data convergence for the first data packet on the target protocol layer entity, or the third convergence identifier is used to indicate a protocol layer entity that performs convergence on the first data packet.

At the routing layer of the first terminal device, a second routing header and a fourth convergence identifier are added to the fourth PDU. The fourth PDU is a PDU of the second data packet at the PDCP layer of the first terminal device. The first routing header is used to indicate a path for transmitting the second data packet. The fourth convergence identifier is used to indicate to perform data convergence for the second data packet on the target protocol layer entity, or the fourth convergence identifier is used to indicate a protocol layer entity that performs convergence on the second data packet.

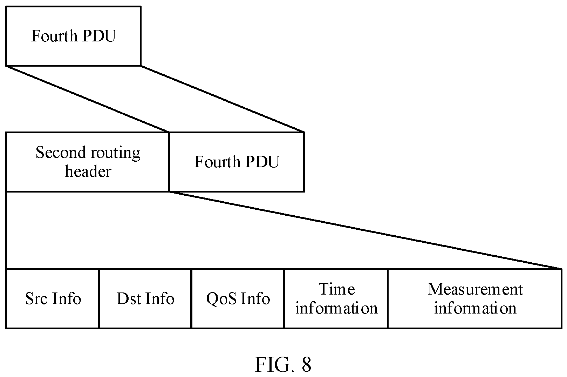

Optionally, adding the second routing header to the fourth PDU may be understood as encapsulating the fourth PDU according to a routing header (Routing-header) protocol. The second routing header may include source information (Source Information, Src Info) and destination information (destination Information, Dst Info). Optionally, the second routing header may further include at least one of quality of service requirement information (Quality of Service Information, QoS Info), time information (Time information, Time Info), and measurement information (Measurement information, Measurement Info). For a specific PDU encapsulation structure, refer to FIG. 8.

Specifically, the source information is used to indicate the first terminal device. Specifically, the source information may be address information of the first terminal device such as an internet protocol (Internet Protocol, IP) address or a media access control (Media Access Control, MAC) address, identification information of the first terminal device, or the like. The identification information of the first terminal device may be an international mobile subscriber identity (International Mobile Subscriber Identification Number, IMSI), a temporary identifier that may be allocated to the first terminal device to protect a privacy network, source terminal location information, or the like.

The destination information is used to indicate the second terminal device. Specifically, the destination information may be address information of the second terminal device, identification information of the second terminal device, or address information or identification information of a terminal device set including the second terminal device, for example, an IP multicast address corresponding to the terminal device set, a MAC multicast address corresponding to the terminal device set, or a group ID of the terminal device set that is allocated in a network.

The QoS information is used to determine a service level for transmitting the fourth PDU, and may be represented by using a priority.

The time information is used to indicate time information related to the second data packet, for example, a generation time of the second data packet, an expected sending time of the second data packet, and a latest sending time of the second data packet.

It should be noted that a process in which the first terminal device obtains the destination information may be indicated by the network device to the first terminal device, or may be obtained through negotiation between the first terminal device and the second terminal device. A manner in which the first terminal device obtains the destination information is not specifically limited in this embodiment of this application.

Then, the third PDU that carries the third convergence identifier and the fourth PDU that carries the second routing header and the fourth convergence identifier are respectively transmitted to different RLC entities at the RLC layer of the first terminal device.

It should be noted that a process of processing the third PDU and the fourth PDU at the RLC layer and a process of processing the third PDU and the fourth PDU below the RLC layer each are basically the same as a PDU transmission process in the prior art. For brevity, details are not described herein.

After receiving the second data packet through the second interface, the network device determines, at the routing layer of the network device by using the destination information carried in the fourth PDU, the second terminal device that receives the second data packet, and forwards the second data packet to the second terminal device.

After receiving the first data packet through the first interface, the second terminal device decapsulates, at the adaptation layer of the second terminal device, the third PDU that carries the third convergence identifier, and transmits, based on the third convergence identifier, the third PDU to a target protocol layer entity that performs convergence on the third PDU, that is, a first convergence entity.

After receiving the second data packet through the second interface, the second terminal device decapsulates, at the routing layer of the second terminal device, the fourth PDU that carries the fourth convergence identifier, and transmits, based on the fourth convergence identifier, the fourth PDU to the target protocol layer entity that performs convergence on the fourth PDU, that is, the first convergence entity.

The first convergence entity of the second terminal device converges the third PDU and the fourth PDU. When the first data packet and the second data packet are generated based on a same data packet, the first convergence entity performs repeated detection and repeated packet loss based on convergence layer sequence numbers carried in the third PDU and the fourth PDU, and may discard either of the third PDU and the fourth PDU.

It should be noted that the foregoing case 1 merely describes a case in which the second data packet is generated by replicating the first data packet. Alternatively, the first data packet may be generated by replicating the second data packet. Another specific transmission process is basically the same as that described above. For brevity, details are not described herein again.

In the protocol stack architecture shown in this embodiment of this application, compared with the foregoing three embodiments, a convergence layer used to converge data packets is separated from a PDCP layer, thereby reducing complexity of data packet processing at the PDCP layer.

Case 2: The first data packet and the second data packet are different data packets.

Specifically, at the convergence layer of the first terminal device, two different data packets in one data flow, namely, the first data packet and the second data packet, are respectively transmitted to the adaptation layer of the first terminal device and the routing layer of the first terminal device. A sequence number of the first data packet is different from a sequence number of the second data packet.

It should be noted that a data packet transmission process in the foregoing case 1 is slightly different from a data packet transmission process in the foregoing case 2 only in terms of a step of whether to replicate the to-be-transmitted first data packet at the convergence layer. In the case 2, the to-be-transmitted first data packet and the to-be-transmitted second data packet may be directly transmitted without a need of performing data packet replication at the convergence layer. A process of transmitting the first data packet in the protocol stack corresponding to the first interface and a process of transmitting the second data packet in the protocol stack corresponding to the second interface each are the same as the process of transmitting a data packet in the protocol stack described in the foregoing case 1. For brevity, details are not described herein again.

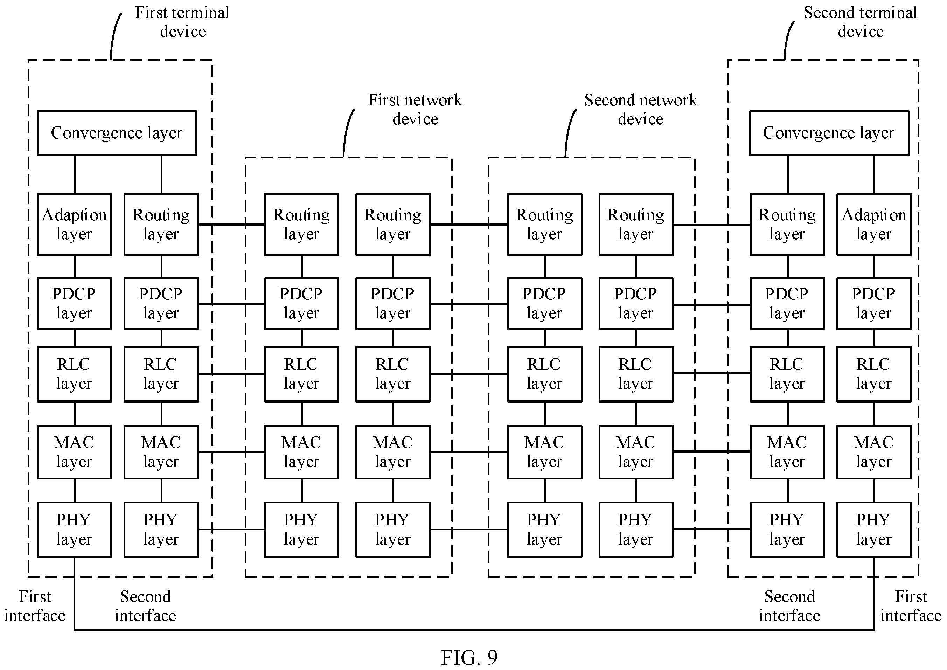

The fifth-type protocol stack is applicable to the foregoing communication scenario 2. In addition, the first interface is a direct connection interface for communication between the first terminal device and the second terminal device, and the second interface is an indirect connection interface for communication between the first terminal device and the network device. FIG. 9 shows an architecture of a protocol stack in each of the first terminal device, the second terminal device, and the network device.

FIG. 9 is a schematic block diagram of an architecture of a protocol stack in a communications system according to an embodiment of this application. It should be understood that FIG. 9 shows only protocol layers that are in the first terminal device, the second terminal device, the first network device, and the second network device and that are related to this embodiment of this application. The first terminal device, the second terminal device, the first network device, and the second network device may further include other protocol layers. This is not specifically limited in this embodiment of this application.

The protocol stack architecture shown in FIG. 9 is basically the same as the protocol stack architecture shown in FIG. 7. For detailed descriptions, refer to the foregoing descriptions of the first-type protocol stack. The following specifically describes a difference between the protocol stack shown in FIG. 9 and the protocol stack shown in FIG. 7. In other words, the following specifically describes a process of transmitting the second data packet through an indirect connection interface between the first terminal device and the first network device.

The first terminal device accesses the first network device, and the second terminal device accesses the second network device. Therefore, in a process in which the first terminal device transmits the data packet to the second terminal device through the second interface, the data packet needs to be forwarded by the two network devices. In other words, a routing layer needs to be separately configured on the first network device and the second network device, to forward the second packet to the second terminal device.

In a process of encapsulating a second routing header into a fourth PDU at a routing layer of the first terminal device, in addition to that the foregoing mentioned destination information used to indicate the second terminal device that receives the second data packet needs to be encapsulated, identification information of the second network device further needs to be encapsulated into the second routing header, and specifically identification information of the first network device may be further encapsulated. In other words, in a process of adding the second routing header to the fourth PDU at the routing layer of the first terminal device, routing information needs to be added to the second routing header. The routing information is used to indicate a routing device that may help the first terminal device forward the second data packet to the second terminal device. Specifically, the routing device may include the first network device and the second network device.

It should be noted that the identification information of the first network device to which the first terminal device belongs and the identification information of the second network device to which the second terminal device belongs may be obtained through negotiation between the first terminal device and the second terminal device.

In an architecture of a sixth-type protocol stack, through configuration by the network device, data packets in one data flow are transmitted through the first interface and the second interface.

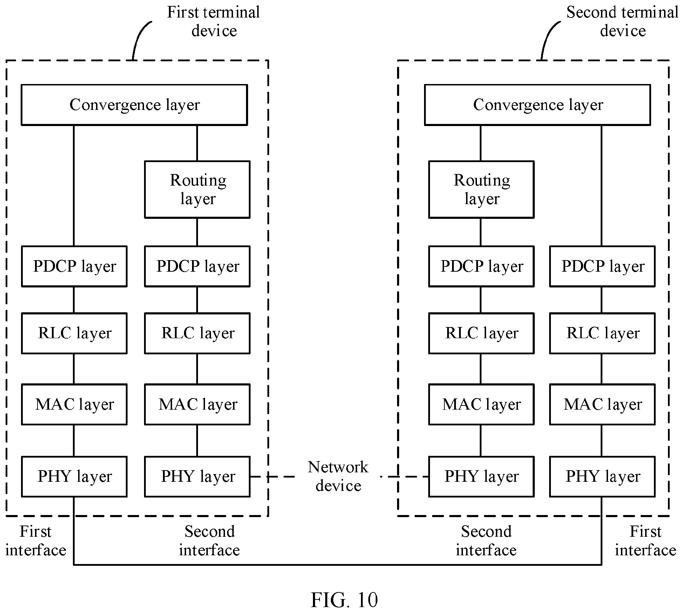

The sixth-type protocol stack may be understood as an improvement on the fourth-type protocol stack and the fifth-type protocol stack. Through configuration by the network device, an adaptation layer is replaced, and a third convergence identifier or a fourth convergence identifier is added to a routing layer. FIG. 10 is a schematic block diagram of an architecture of a protocol stack in a communications system according to an embodiment of this application. It should be understood that FIG. 10 merely shows an architecture of a protocol stack in each of the first terminal device and the second terminal device. An architecture of a protocol stack in a network device in the architecture of the sixth-type protocol stack is the same as the architecture of the protocol stack in the network device in the architecture of the fourth-type protocol stack and the architecture of the fifth-type protocol stack. For brevity, details are not described herein again.

In the protocol stack architecture shown in FIG. 10, the first terminal device transmits a third PDU obtained from a convergence layer to an RLC entity corresponding to the first interface, and finally the third PDU is transmitted to the second terminal device through the first interface. The first terminal device transmits a fourth PDU obtained from the convergence layer to a routing layer corresponding to the second interface, and adds a second routing header. Then the second PDU that carries the second routing header is transmitted to an RLC entity corresponding to the second interface, and finally the fourth PDU is transmitted to the second terminal device through the second interface.

Specifically, before step 210, the method further includes: receiving, by the first terminal device, second configuration information sent by the network device, where the second configuration information is used to configure the first terminal device to transmit the first data packet through the first interface and transmit the second data packet through the second interface.

It should be noted that, when the first terminal device and the second terminal device belong to a same network device, the network device that sends the second configuration information is the network device to which the first terminal device and the second terminal device belong. When the first terminal device and the second terminal device belong to different network devices, the network device that sends the second configuration information is the first network device accessed by the first terminal device.

It should be further understood that, when the first terminal device accesses the first network device and the second terminal device accesses the second network device, the first network device and the second network device determine, through negotiation, the first interface and the second interface that may be used by the first terminal device to transmit data packets to the second terminal device. Finally, the first network device may perform configuration for the first terminal device by using the first configuration information, and the second network device may perform configuration for the second terminal device by using fourth configuration information. A function of the fourth configuration information is the same as that of the second configuration information, and the fourth configuration information and the second configuration information may carry same indication information. Specific content of the indication information is described in detail below.

Optionally, the second configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

In this embodiment of this application, through configuration by the network device, the first interface and the second interface are used by the first terminal device to transmit data packets to the second terminal device, and therefore the adaptation layer does not need to be newly added to the protocol stack architecture. This reduces improvement on an existing protocol stack and reduce costs required for improving the protocol stack.

The architecture of the first-type protocol stack to the architecture of the sixth-type protocol stack are described in a manner in which the first interface is a direct connection interface and the second interface is an indirect connection interface. In this embodiment of this application, both the first interface and the second interface may be direct connection interfaces. For example, the first interface is a direct connection interface in the LTE standard, and the second interface is a direct connection interface in the NR standard.

When the first interface is a direct connection interface in the LTE standard, and the second interface is a direct connection interface in the NR standard, protocol stack architectures corresponding to the two interfaces are the same, and corresponding data packet transmission processes are also the same. For brevity, details are not described one by one, and only a protocol stack architecture that is transformed based on the architecture of the first-type protocol stack and the architecture of the third-type protocol stack is described.

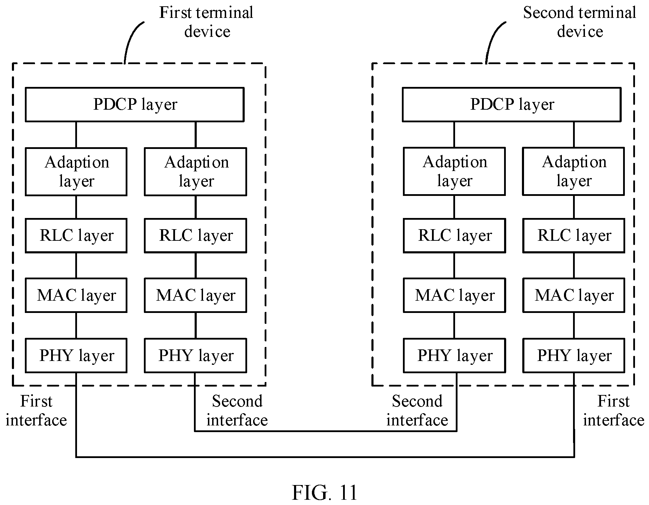

FIG. 11 is a schematic block diagram of an architecture of a protocol stack based on a dual-direct connection interface according to an embodiment of this application. In the protocol stack architecture shown in FIG. 11, an architecture of a protocol stack corresponding to a first interface and an architecture of a protocol stack corresponding to a second interface each are the same as the architecture of the protocol stack corresponding to the first interface in the architecture of the first-type protocol stack. For a specific data packet transmission process, refer to a process of transmitting a data packet through the first interface in the architecture of the first-type protocol stack. For brevity, details are not described herein again.

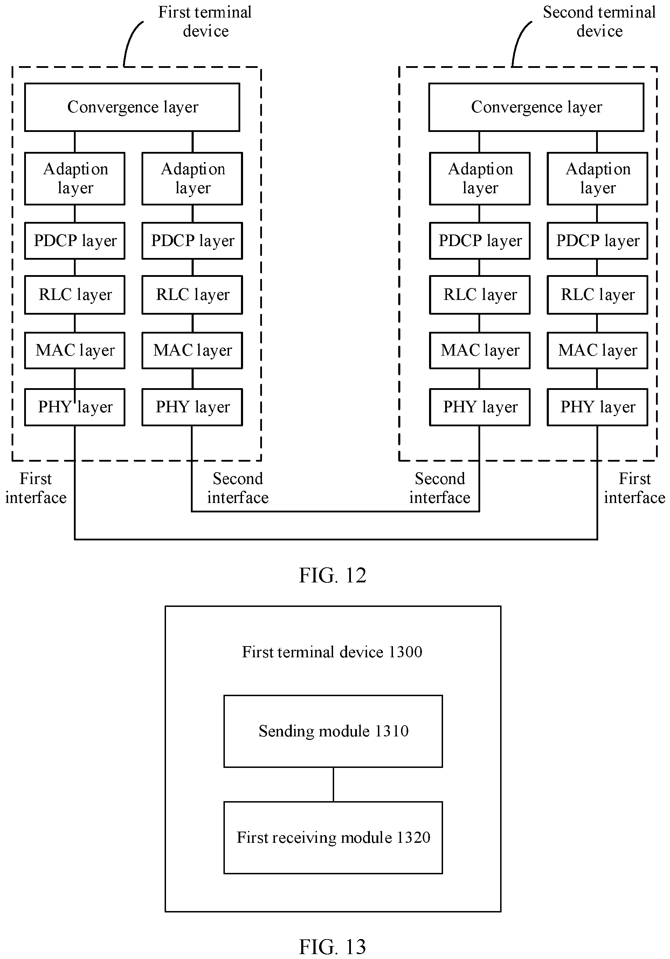

FIG. 12 is a schematic block diagram of an architecture of a protocol stack based on a dual-direct connection interface according to another embodiment of this application. In the protocol stack architecture shown in FIG. 12, an architecture of a protocol stack corresponding to a first interface and an architecture of a protocol stack corresponding to a second interface each are the same as the architecture of the protocol stack corresponding to the first interface in the architecture of the third-type protocol stack. For a specific data packet transmission process, refer to a process of transmitting a data packet through the first interface in the architecture of the third-type protocol stack. For brevity, details are not described herein again.

It should be noted that transformation may be further performed based on the protocol stack architectures shown in FIG. 11 and FIG. 12. For example, based on descriptions of the architecture of the second-type protocol stack and the architecture of the fourth-type protocol stack, a function of replacing an adaption layer by transmitting data packets in one data flow through the first interface and the second interface is implemented through configuration by the network device, thereby preventing the protocol stack in the first terminal device and the protocol stack in the second terminal device from being improved when the adaptation layer is newly added.

Optionally, in an embodiment, before step 210, the method further includes: Step 230: Configuration process. To be specific, the network device configures the first terminal device to transmit the first data packet and the second data packet through a multi-interface.

Specifically, the first terminal device receives multi-interface transmission indication information sent by the network device, where the multi-interface transmission indication information is used to indicate the first terminal device to transmit the first data packet and the second data packet to the second terminal device through two interfaces, and/or the multi-interface transmission indication information is further used to indicate whether data carried in the first data packet is the same as data carried in the second data packet.

Correspondingly, a function of the second terminal device for receiving, through the multi-interface, the first data packet and the second data packet that are transmitted by the first terminal device may be specified by the second terminal device according to a communication protocol, or may be configured by the network device for the second terminal device. For a specific configuration manner, refer to a configuration process configured by the network device for the first terminal device.

It should be understood that the configuration process in step 230 may be implemented by performing signaling interaction once with the foregoing process in which the network device sends the first configuration information to the first terminal device. For example, the network device may directly send the first configuration information to the first terminal device, simultaneously implement the foregoing configuration process, and configure the first terminal device to transmit the first data packet and the second data packet to the second terminal device through the first interface and the second interface. The configuration process in step 230 may alternatively be implemented by performing signaling interaction twice with the foregoing process in which the network device sends the first configuration information to the first terminal device. This is not specifically limited in this embodiment of this application.

It should be noted that a specific transmission manner in which the first terminal device transmits a data packet to the second terminal device may be configured by the network device for the first terminal device, or may be specified according to the communication protocol. This is not specifically limited in this embodiment of this application.

It should be further understood that the foregoing transmission manner in which the first terminal device transmits the first data packet and the second data packet to the second terminal device through the two interfaces may be specified according to the communication protocol, and a transmission manner indicating whether the data carried in the to-be-transmitted first data packet and the data carried in the second data packet are the same may be configured by the network device for the first terminal device. Alternatively, the foregoing transmission manner in which the first terminal device transmits the first data packet and the second data packet to the second terminal device through the two interfaces may be configured by the network device for the first terminal device, and a transmission manner indicating whether the data carried in the to-be-transmitted first data packet and the data carried in the second data packet are the same may be specified according to the communication protocol.

Optionally, in an embodiment, before the first terminal device receives the multi-interface transmission indication information sent by the network device, the method further includes: sending, by the first terminal device, a multi-interface transmission request to the network device, where the multi-interface transmission request is used to request the network device to transmit the first data packet and the second data packet to the second terminal device through a multi-interface.

In other words, in a manner in which the first terminal device requests the network device, the network device may configure, for the first terminal device, to transmit the first data packet and the second data packet through the multi-interface.

Optionally, the multi-interface transmission request carries a measurement report of a first channel and/or a QoS parameter of the first channel. The first channel is used to directly transmit a data packet between the first terminal device and the second terminal device, or may be a channel corresponding to the direct connection interface, for example, a sidelink (sidelink, SL) corresponding to the direct connection interface.

Optionally, that the first terminal device receives multi-interface transmission indication information sent by the network device includes: receiving, by the first terminal device, a system information block (System Information Block, SIB) sent by the network device, where the SIB carries the multi-interface transmission indication information; or receiving, by the first terminal device, dedicated signaling sent by the network device, where the dedicated signaling carries the multi-interface transmission indication information.

Optionally, in an embodiment, before step 210, the method further includes: 240: Activation process. The activation process is used to activate, for the first terminal device, a transmission manner in which the first data packet is transmitted through the first interface and the second data packet is transmitted through the second interface. Specifically, there may be two activation manners.

In an activation manner 1, the network device performs activation for the first terminal device.

Specifically, when the first terminal device and the second terminal device access a same network device, the first terminal device receives first activation indication information sent by the network device, where the first activation indication information is used to indicate the first terminal device to activate data packet transmission to the second terminal device through a multi-interface, and the second terminal device receives second activation indication information sent by the network device, where the second activation indication information is used to indicate the first terminal device to activate data packet transmission to the second terminal device through a multi-interface.

When the first terminal device accesses the first network device, and the second terminal device accesses the second network device, the first terminal device receives first activation indication information sent by the first network device, where the first activation indication information is used to indicate the first terminal device to activate data packet transmission to the second terminal device through a multi-interface, and the second terminal device receives second activation indication information sent by the second network device, where the second activation indication information is used to indicate the first terminal device to activate data packet transmission to the second terminal device through a multi-interface.

It should be noted that the first network device and the second network device may determine, through negotiation, whether to activate a function of transmitting a data packet to the second terminal device through a multi-interface between the first terminal device and the second terminal device.

It should be further understood that data packets transmitted to the second terminal device through the multi-interface and through activation by the first terminal device may be data packets in one data flow, that is, the first data packet and the second data packet.

In a second activation manner 2, the first terminal device and the second terminal device perform activation through negotiation.

Specifically, the first terminal device sends an activation request to the second terminal device, where the activation request is used to request the second terminal device to transmit a data packet to the first terminal device through a multi-interface, and the first terminal device receives a response message sent by the second terminal device, where the response message is used to indicate whether the second terminal device agrees to transmit a data packet to the first terminal device through the multi-interface.

It should be noted that the second activation manner may be used in a case in which the first terminal device and the second terminal device belong to a same network device, or may be used in a case in which the first terminal device and the second terminal device belong to different network devices.

In a third activation manner, the first terminal device forwards, to the second terminal device, the first activation indication information sent by the first network device.

Specifically, the first terminal device receives the first activation indication information sent by the first network device, where the first activation indication information is used to indicate the first terminal device to activate data packet transmission to the second terminal device through a multi-interface, and the first terminal device forwards the first activation indication information to the second terminal device.

It should be noted that the third activation manner may be used in a case in which the first terminal device and the second terminal device belong to a same network device, or may be used in a case in which the first terminal device and the second terminal device belong to different network devices.

The following describes an embodiment of this application from the perspective of transmitting signaling by a network device to a terminal device. It should be understood that, for a function of the signaling in the method described in this embodiment of this application and content carried in the signaling, refer to the foregoing descriptions. For brevity, details are not described herein. Another embodiment of this application further provides a communication method. The method includes: sending, by a network device, multi-interface transmission indication information to a first terminal device, where the multi-interface transmission indication information is used to indicate the first terminal device to transmit the first data packet and a second data packet to the second terminal device through a multi-interface; and/or the multi-interface transmission indication information is further used to indicate whether data carried in the first data packet is the same as data carried in the second data packet.

Optionally, the first data packet and the second data packet are a same data packet in one data flow.

Optionally, the first data packet and the second data packet are different data packets in one data flow.

Optionally, in an embodiment, before the sending, by a network device, multi-interface transmission indication information to a first terminal device, the method further includes: receiving, by the network device, a multi-interface transmission request sent by the first terminal device, where the multi-interface transmission request is used to request the network device to transmit the first data packet and the second data packet to the second terminal device through the multi-interface.

Optionally, in an embodiment, the receiving, by the network device, a multi-interface transmission request sent by the first terminal device includes: receiving, by the network device, a system information block SIB sent by the first terminal device, where the SIB carries the multi-interface transmission indication information; or receiving, by the network device, dedicated signaling sent by the first terminal device, where the dedicated signaling carries the multi-interface transmission indication information.

Optionally, in an embodiment, the multi-interface include a first interface and a second interface, and the method further includes: sending, by the network device, first configuration information to the first terminal device, where the first configuration information is used to configure the first terminal device to transmit the first data packet through the first interface and transmit the second data packet through the second interface.

Optionally, in an embodiment, the first configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

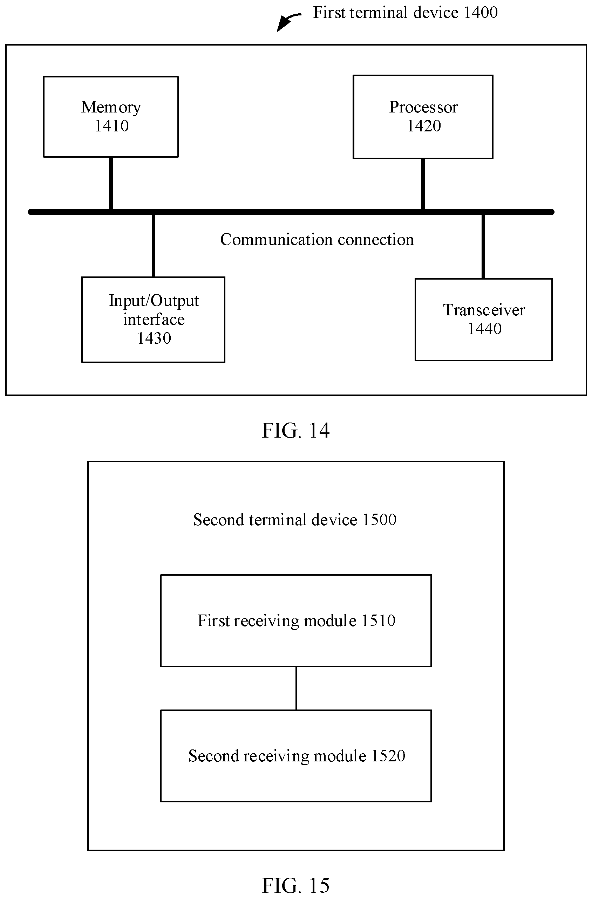

The foregoing describes in detail the communication methods in the embodiments of this application with reference to FIG. 1 to FIG. 13. The following describes in detail apparatuses in the embodiments of this application with reference to FIG. 14 to FIG. 16. It should be understood that the apparatuses shown in FIG. 14 to FIG. 16 can implement the steps in FIG. 2. Therefore, for specific details of the apparatuses, refer to the descriptions in the foregoing embodiments. To avoid repetition, details are not described herein again.

FIG. 13 is a schematic block diagram of a first terminal device according to an embodiment of this application. A first terminal device 1300 shown in FIG. 13 includes a sending module 1310 and a first receiving module 1320.

The sending module 1310 is configured to transmit a first data packet to a second terminal device through a first interface, where the first interface is a communications interface for direct communication between the first terminal device and the second terminal device in a long term evolution LTE standard, or a communications interface for direct communication between the first terminal device and the second terminal device in a new radio NR standard.

The sending module is further configured to transmit a second data packet to the second terminal device through a second interface, where the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.

Optionally, in an embodiment, the first data packet and the second data packet are a same data packet in one data flow.

Optionally, in an embodiment, the first data packet and the second data packet are different data packets in one data flow.

Optionally, in an embodiment, the first data packet and the second data packet are converged by a same target protocol layer entity in the second terminal device.

Optionally, in an embodiment, a first routing layer is configured in the first terminal device, and the first routing layer is located between a packet data convergence protocol PDCP layer of the first terminal device and a radio link control RLC protocol layer of the first terminal device. The first terminal device further includes a routing entity of the first routing layer, configured to add a first routing header to a second protocol data unit PDU, where the second PDU is a PDU of the second data packet at the PDCP layer of the first terminal device, and the first routing header is used to indicate a path for transmitting the second data packet.

Optionally, in an embodiment, a first adaptation layer is configured in the first terminal device, and the first adaptation layer is located between the PDCP layer of the first terminal device and the RLC layer of the first terminal device. The first terminal device further includes an adaptation entity of the first adaptation layer, configured to add a first convergence identifier to a first PDU, where the first PDU is a PDU of the first data packet at the PDCP layer of the first terminal device, and the first convergence identifier is used to indicate to perform data convergence for the first data packet on the target protocol layer entity.

Optionally, in an embodiment, before the transmitting a first data packet to a second terminal device through a first interface, the first terminal device further includes the first receiving module, and the first receiving module 1320 is further configured to receive first configuration information sent by a network device, where the first configuration information is used to configure the first terminal device to transmit the first data packet through the first interface and transmit the second data packet through the second interface.

Optionally, in an embodiment, the first configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

Optionally, in an embodiment, a first convergence layer and a second routing layer are configured in the first terminal. The first terminal device further includes a routing entity of the second routing layer, configured to obtain a third PDU from the first convergence layer, where the third PDU is a PDU of the second data packet at the first convergence layer. The routing entity of the second routing layer is further configured to add a second routing header to the third PDU, where the third PDU is a PDU of the second data packet at the first convergence layer, and the second routing header is used to indicate a path for transmitting the second data packet. The routing entity of the second routing layer is further configured to transmit, to a PDCP layer of the first terminal, the third PDU that carries the second routing header.

Optionally, in an embodiment, a second adaptation layer is configured in the first terminal. The first terminal device further includes an adaptation entity of the second adaptation layer, configured to obtain a fourth PDU from the first convergence layer, where the fourth PDU is a PDU of the first data packet at the first convergence layer. The adaptation entity of the second adaptation layer is further configured to add a third convergence identifier to the fourth PDU, where the third convergence identifier is used to indicate a data flow to which the first data packet belongs. The adaptation entity of the second adaptation layer is further configured to transmit, to the PDCP layer of the first terminal, the fourth PDU that carries the third convergence identifier.

Optionally, in an embodiment, the first terminal device further includes a second receiving module, configured to receive second configuration information sent by a network device, where the second configuration information is used to configure the first terminal device to transmit the first data packet through the first interface and transmit the second data packet through the second interface.

Optionally, in an embodiment, the second configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

Optionally, in an embodiment, the first terminal device further includes a third receiving module, configured to receive multi-interface transmission indication information sent by the network device, where the multi-interface transmission indication information is used to indicate the first terminal device to transmit the first data packet and the second data packet to the second terminal device through the two interfaces; and/or the multi-interface transmission indication information is further used to indicate whether data carried in the first data packet is the same as data carried in the second data packet.

Optionally, in an embodiment, the sending module is further configured to send a multi-interface transmission request to the network device, where the multi-interface transmission request is used to request the network device to transmit the first data packet and the second data packet to the second terminal device through a multi-interface.

Optionally, in an embodiment, the third receiving module is specifically configured to: receive a system information block SIB sent by the network device, where the SIB carries the multi-interface transmission indication information; or receive dedicated signaling sent by the network device, where the dedicated signaling carries the multi-interface transmission indication information.

In an optional embodiment, the sending module 1310 and the first receiving module 1320 may be a transceiver 1440. The protocol layer entity may be a processor 1420. The protocol layer entity may be a routing entity, an adaptation entity, a first convergence entity, or the like. A protocol layer in the first terminal device may be a program module stored in a memory 1410 of the first terminal device, and the protocol layer includes the first routing layer, the second routing layer, the first adaptation layer, the second adaptation layer, the first convergence layer, and the like. The first terminal device may further include an input/output interface 1430, which is specifically shown in FIG. 14.

FIG. 14 is a schematic block diagram of a first terminal device according to another embodiment of this application. A first terminal device 1400 shown in FIG. 14 may include the memory 1410, the processor 1420, the input/output interface 1430, and the transceiver 1440. The memory 1410, the processor 1420, the input/output interface 1430, and the transceiver 1440 are connected to each other through an internal connection path. The memory 1410 is configured to store an instruction. The processor 1420 is configured to execute the instruction stored in the memory 1420, to control the input/output interface 1430 to receive input data and information, output data such as an operation result, and control the transceiver 1440 to send a signal.

The transceiver 1440 is configured to: transmit a first data packet to a second terminal device through a first interface, where the first interface is a communications interface for direct communication between the first terminal device 1400 and the second terminal device in a long term evolution LTE standard, or a communications interface for direct communication between the first terminal device and the second terminal device in a new radio NR standard; and
transmit a second data packet to the second terminal device through a second interface, where the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.

It should be understood that, in this embodiment of this application, the processor 1420 may be configured to execute related programs by using a general-purpose central processing unit (Central Processing Unit, CPU), a microprocessor, an application-specific integrated circuit (Application Specific Integrated Circuit, ASIC), or one or more integrated circuits, to implement the technical solutions provided in the embodiments of this application.

It should be further understood that the transceiver 1440 is also referred to as a communications interface, and uses a transceiver apparatus such as but not limited to a transceiver to implement communication between the first terminal device 1400 and another device or a communications network.

The memory 1410 may include a read-only memory and a random access memory, and provide an instruction and data for the processor 1420. A part of the processor 1420 may further include a nonvolatile random access memory. For example, the processor 1420 may further store information of a device type.

In an implementation process, the steps in the foregoing methods can be implemented by using a hardware integrated logic circuit in the processor 1420 or by using an instruction in a form of software. The communication method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1410, and the processor 1420 reads information in the memory 1410 and completes the steps in the foregoing methods in combination with hardware of the processor. To avoid repetition, details are not described herein again.

It should be understood that the processor in this embodiment of this application may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

FIG. 15 is a schematic block diagram of a second terminal device according to an embodiment of this application. A second terminal device 1500 shown in FIG. 15 includes a first receiving module 1510 and a second receiving module 1520.

The first receiving module 1510 is configured to receive, through a first interface, a first data packet sent by a first terminal device, where the first interface is a communications interface for direct communication between the first terminal device and the second terminal device 1500 in a long term evolution LTE standard, or a communications interface for direct communication between the first terminal device and the second terminal device in a new radio NR standard.

The first receiving module is further configured to receive, through a second interface, a second data packet sent by the first terminal device, where the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.

Optionally, in an embodiment, the first data packet and the second data packet are a same data packet in one data flow.

Optionally, in an embodiment, the first data packet and the second data packet are different data packets in one data flow.

Optionally, in an embodiment, the first data packet and the second data packet are converged by a same target protocol layer entity in the second terminal device.

Optionally, in an embodiment, the target protocol layer entity is a packet data convergence protocol PDCP entity, a first routing layer is configured in the second terminal device, and the first routing layer is located between a PDCP layer of the second terminal device and a radio link control RLC protocol layer of the second terminal device. The second terminal device further includes a routing layer entity of the first routing layer, configured to: decapsulate a second protocol data unit PDU that carries a first routing header; and transmit the second PDU to the PDCP entity, where the second PDU is a PDU of the second data packet at a PDCP layer of the first terminal device, and the first routing header is used to indicate a path for transmitting the second data packet.

Optionally, in an embodiment, a first adaptation layer is configured in the second terminal device, and the first adaptation layer is located between the PDCP layer of the second terminal device and the RLC layer of the second terminal device. The second terminal device further includes an adaptation entity of the first adaptation layer, configured to transmit, based on a first convergence identifier carried in a first PDU, the first PDU to the PDCP entity, where the first PDU is a PDU of the first data packet at the PDCP layer of the first terminal device, and the first convergence identifier is used to indicate to perform data convergence for the first data packet on the target protocol layer entity.

Optionally, in an embodiment, before the receiving, by a second terminal device through a first interface, a first data packet sent by a first terminal device, the second terminal device further includes the second receiving module, configured to receive first configuration information sent by a network device, where the first configuration information is used to configure the first terminal device to transmit the first data packet through the first interface and transmit the second data packet through the second interface.

Optionally, in an embodiment, the first configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

Optionally, in an embodiment, a first convergence layer and a second routing layer are configured in the second terminal device, and the target protocol layer entity is a first convergence entity at the first convergence layer. A routing entity of the second routing layer is configured to obtain a third PDU from a PDCP layer of the second terminal device, where the third PDU is a PDU of the second data packet at a PDCP layer of the first terminal device. The routing entity of the second routing layer is further configured to: decapsulate the third PDU that carries a second routing header; and transmit the third PDU to the first convergence entity, where the second routing header is used to indicate a path for transmitting the second data packet. The first convergence entity is configured to perform data convergence for the second data packet.

Optionally, in an embodiment, a second adaptation layer is configured in the second terminal device. The second terminal device includes an adaptation entity of the second adaptation layer, configured to obtain a fourth PDU from the PDCP layer of the second terminal device, where the fourth PDU is a PDU of the first data packet at the PDCP layer of the first terminal device. The adaptation entity of the second adaptation layer is configured to transmit the fourth PDU to the first convergence entity based on a third convergence identifier carried in the fourth PDU, where the third convergence identifier is used to indicate a data flow to which the first data packet belongs. The first convergence entity is configured to perform data convergence for the first data packet.

Optionally, in an embodiment, the second terminal device further includes a third receiving module, configured to receive second configuration information sent by a network device, where the second configuration information is used to configure the first terminal device to transmit the first data packet through the first interface and transmit the second data packet through the second interface.

Optionally, in an embodiment, the second configuration information carries at least one of the following indication information: indication information used to indicate that a radio bearer corresponding to the first interface is the same as a radio bearer corresponding to the second interface; indication information used to indicate that a destination address of the first data packet transmitted through the first interface is the same as a destination address of the second data packet transmitted through the second interface; and indication information used to indicate that a logical channel corresponding to the first interface is the same as a logical channel corresponding to the second interface.

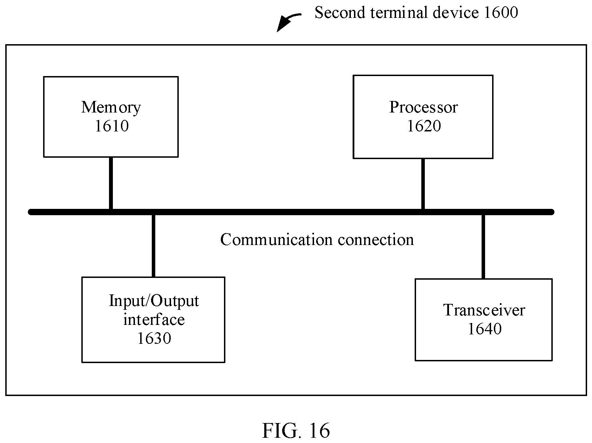

In an optional embodiment, the first receiving module 1510 and the second receiving module 1520 may be a transceiver 1640. The protocol layer entity may be a processor 1620, and the protocol layer entity may be a routing entity, an adaptation entity, a first convergence entity, or the like. A protocol layer in the second terminal device may be a program module stored in a memory 1610 of the second terminal device, and the protocol layer includes the first routing layer, the second routing layer, the first adaptation layer, the second adaptation layer, the first convergence layer, and the like. The second terminal device may further include an input/output interface 1630, which is specifically shown in FIG. 16.

FIG. 16 is a schematic block diagram of a second terminal device according to another embodiment of this application. A second terminal device 1600 shown in FIG. 16 may include the memory 1610, the processor 1620, the input/output interface 1630, and the transceiver 1640. The memory 1610, the processor 1620, the input/output interface 1630, and the transceiver 1640 are connected to each other through an internal connecting path. The memory 1610 is configured to store an instruction. The processor 1620 is configured to execute the instruction stored in the memory 1620, to control the input/output interface 1630 to receive input data and information, or output data such as an operation result, and control the transceiver 1640 to send a signal.

The transceiver 1640 is configured to receive, through a first interface, a first data packet sent by a first terminal device, where the first interface is a communications interface for direct communication between the first terminal device and the second terminal device 1600 in a long term evolution LTE standard, or a communications interface for direct communication between the first terminal device and the second terminal device in a new radio NR standard; and
receive, through a second interface, a second data packet sent by the first terminal device, where the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.

It should be understood that, in this embodiment of this application, the processor 1620 may be configured to execute related programs by using a general-purpose central processing unit (Central Processing Unit, CPU), a microprocessor, an application-specific integrated circuit (Application Specific Integrated Circuit, ASIC), or one or more integrated circuits, to implement the technical solutions provided in the embodiments of this application.

It should be further understood that the transceiver 1640 is also referred to as a communications interface, and uses a transceiver apparatus such as but not limited to a transceiver to implement communication between the second terminal device 1600 and another device or a communications network.

The memory 1610 may include a read-only memory and a random access memory, and provide an instruction and data for the processor 1620. A part of the processor 1620 may further include a nonvolatile random access memory. For example, the processor 1620 may further store information of a device type.

In an implementation process, the steps in the foregoing methods can be implemented by using a hardware integrated logic circuit in the processor 1620 or by using an instruction in a form of software. The communication method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1610, and the processor 1620 reads information in the memory 1610 and completes the steps in the foregoing methods in combination with hardware of the processor. To avoid repetition, details are not described herein again.

It should be understood that the processor in this embodiment of this application may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

It should be understood that, in the embodiments of this application, "B corresponding to A" indicates that B is associated with A, and B may be determined based on A. However, it should further be understood that determining A based on B does not mean that B is determined based on A only. In other words, B may also be determined based on A and/or other information.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, function units in the embodiments of this application may be integrated into one processing unit, or each of the units may exist alone physically, or two or more units are integrated into one unit.

All or some of the foregoing embodiments may be implemented through software, hardware, firmware, or any combination thereof. When the software is used to implement the embodiments, all or some of the embodiments may be implemented in a form of a computer program product. The computer program product includes one or more computer instructions. When the computer program instructions are loaded or executed on a computer, the procedures or functions according to the embodiments of this application are all or partially generated. The computer may be a general-purpose computer, a special purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD), a semiconductor medium (for example, a solid-state drive (Solid State Disk, SSD)), or the like.

The invention also provides the following embodiments. It should be noted that, the numbering of the following embodiments does not necessarily need to comply with the numbering sequence of the foregoing embodiments.
Embodiment 1. A communication method, comprising:
   transmitting, by a first terminal device, a first data packet to a second terminal device through a first interface, wherein the first interface is a communications interface for direct communication between the first terminal device and the second terminal device in a long term evolution LTE standard, or a communications interface for direct communication between the first terminal device and the second terminal device in a new radio NR standard; and
   transmitting, by the first terminal device, a second data packet to the second terminal device through a second interface, wherein the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.
Embodiment 2. The method according to embodiment 1, wherein the first data packet and the second data packet are a same data packet in one data flow.
Embodiment 3. The method according to embodiment 1, wherein the first data packet and the second data packet are different data packets in one data flow.
Embodiment 4. The method according to any one of embodiments 1 to 3, wherein the first data packet and the second data packet are converged by a same target protocol layer entity in the second terminal device.
Embodiment 5. The method according to any one of embodiments 1 to 4, wherein a first routing layer is configured in the first terminal device, and the first routing layer is located between a packet data convergence protocol PDCP layer of the first terminal device and a radio link control RLC protocol layer of the first terminal device; and
   before the transmitting, by the first terminal device, a second data packet to the second terminal device through a second interface, the method further comprises:
   adding, by the first terminal device, a first routing header to a second protocol data unit PDU at the first routing layer, wherein the second PDU is a PDU of the second data packet at the PDCP layer of the first terminal device, and the first routing header is used to indicate a path for transmitting the second data packet.
Embodiment 6. The method according to embodiment 5, wherein a first adaptation layer is configured in the first terminal device, and the first adaptation layer is located between the PDCP layer of the first terminal device and the RLC layer of the first terminal device; and
   before the transmitting, by a first terminal device, a first data packet to a second terminal device through a first interface, the method further comprises:
   adding, by the first terminal device, a first convergence identifier to a first PDU at the first adaptation layer, wherein the first PDU is a PDU of the first data packet at the PDCP layer of the first terminal device, and the first convergence identifier is used to indicate to perform data convergence for the first data packet on the target protocol layer entity.
Embodiment 7. The method according to any one of embodiments 1 to 5, wherein before the transmitting a first data packet to a second terminal device through a first interface, the method further comprises:
   receiving, by the first terminal device, first configuration information sent by a network device, wherein the first configuration information is used to configure the first terminal device to transmit the first data packet through the first interface and transmit the second data packet through the second interface.
Embodiment 8. The method according to embodiment 7, wherein the first configuration information carries at least one of the following indication information:
   indication information used to indicate that a radio bearer corresponding to the first interface is the same as a radio bearer corresponding to the second interface;
   indication information used to indicate that a destination address of the first data packet transmitted through the first interface is the same as a destination address of the second data packet transmitted through the second interface; or
   indication information used to indicate that a logical channel corresponding to the first interface is the same as a logical channel corresponding to the second interface.
Embodiment 9. The method according to any one of embodiments 1 to 4, wherein a first convergence layer and a second routing layer are configured in the first terminal device; and
   before the transmitting, by the first terminal device, a second data packet to the second terminal device through a second interface, the method further comprises:
   obtaining, by the first terminal device, a third PDU from the first convergence layer, wherein the third PDU is a PDU of the second data packet at the first convergence layer;
   adding, by the first terminal device, a second routing header to the third PDU at the second routing layer, wherein the third PDU is a PDU of the second data packet at the first convergence layer, and the second routing header is used to indicate a path for transmitting the second data packet; and
   transmitting, by the first terminal device to a PDCP layer of the first terminal device, the third PDU that carries the second routing header.
   Embodiment 10. The method according to embodiment 9, wherein a second adaptation layer is configured in the first terminal device; and
   before the transmitting, by a first terminal device, a first data packet to a second terminal device through a first interface, the method further comprises:
      obtaining, by the first terminal device, a fourth PDU from the first convergence layer, wherein the fourth PDU is a PDU of the first data packet at the first convergence layer;
      adding, by the first terminal device, a third convergence identifier to the fourth PDU at the second adaptation layer, wherein the third convergence identifier is used to indicate a data flow to which the first data packet belongs; and
      transmitting, by the first terminal device to the PDCP layer of the first terminal device, the fourth PDU that carries the third convergence identifier.
Embodiment 11. The method according to embodiment 9, wherein before the transmitting a first data packet to a second terminal device through a first interface, the method further comprises:
   receiving, by the first terminal device, second configuration information sent by a network device, wherein the second configuration information is used to configure the first terminal device to transmit the first data packet through the first interface and transmit the second data packet through the second interface.
Embodiment 12. The method according to embodiment 11, wherein the second configuration information carries at least one of the following indication information:
   indication information used to indicate that a radio bearer corresponding to the first interface is the same as a radio bearer corresponding to the second interface;
   indication information used to indicate that a destination address of the first data packet transmitted through the first interface is the same as a destination address of the second data packet transmitted through the second interface; or
   indication information used to indicate that a logical channel corresponding to the first interface is the same as a logical channel corresponding to the second interface.
Embodiment 13. The method according to any one of embodiments 1 to 12, wherein before the transmitting, by a first terminal device, a first data packet to a second terminal device through a first interface, the method further comprises:
   receiving, by the first terminal device, multi-interface transmission indication information sent by the network device, wherein the multi-interface transmission indication information is used to indicate the first terminal device to transmit the first data packet and the second data packet to the second terminal device through the first interface and the second interface; and/or
   the multi-interface transmission indication information is further used to indicate whether data carried in the first data packet is the same as data carried in the second data packet.
Embodiment 14. The method according to embodiment 13, wherein before the receiving, by the first terminal device, multi-interface transmission indication information sent by the network device, the method further comprises:
   sending, by the first terminal device, a multi-interface transmission request to the network device, wherein the multi-interface transmission request is used to request the network device to transmit the first data packet and the second data packet to the second terminal device through a multi-interface.
Embodiment 15. The method according to embodiment 13, wherein the receiving, by the first terminal device, multi-interface transmission indication information sent by the network device comprises:
   receiving, by the first terminal device, a system information block SIB sent by the network device, wherein the SIB carries the multi-interface transmission indication information; or
   receiving, by the first terminal device, dedicated signaling sent by the network device, wherein the dedicated signaling carries the multi-interface transmission indication information.
Embodiment 16. A communication method, comprising:
   receiving, by a second terminal device through a first interface, a first data packet sent by a first terminal device, wherein the first interface is a communications interface for direct communication between the first terminal device and the second terminal device in a long term evolution LTE standard, or a communications interface for direct communication between the first terminal device and the second terminal device in a new radio NR standard; and
   receiving, by the second terminal device through a second interface, a second data packet sent by the first terminal device, wherein the second interface is any one of the following interfaces: a communications interface for communication between the first terminal device and an LTE network device, a communications interface for communication between the first terminal device and an NR network device, the communications interface for direct communication between the first terminal device and the second terminal device in the LTE standard, the communications interface for direct communication between the first terminal device and the second terminal device in the NR standard, a communications interface for direct communication between the first terminal device and a relay terminal device in the LTE standard, and a communications interface for direct communication between the first terminal device and the relay terminal device in the NR standard.
Embodiment 17. The method according to embodiment 16, wherein the first data packet and the second data packet are a same data packet in one data flow.
Embodiment 18. The method according to embodiment 16 or 17, wherein the first data packet and the second data packet are different data packets in one data flow.
Embodiment 19. The method according to any one of embodiments 16 to 18, wherein the first data packet and the second data packet are converged by a same target protocol layer entity in the second terminal device.
Embodiment 20. The method according to embodiment 19, wherein the target protocol layer entity is a packet data convergence protocol PDCP entity, a first routing layer is configured in the second terminal device, and the first routing layer is located between a PDCP layer of the second terminal device and a radio link control RLC protocol layer of the second terminal device; and
   the receiving, by the second terminal device through a second interface, a second data packet sent by the first terminal device comprises:
   decapsulating, by the second terminal device at the first routing layer, a second protocol data unit PDU that carries a first routing header, and transmitting the second PDU to the PDCP entity, wherein the second PDU is a PDU of the second data packet at a PDCP layer of the first terminal device, and the first routing header is used to indicate a path for transmitting the second data packet.
Embodiment 21. The method according to embodiment 20, wherein a first adaptation layer is configured in the second terminal device, and the first adaptation layer is located between the PDCP layer of the second terminal device and the RLC layer of the second terminal device; and
   the receiving, by a second terminal device through a first interface, a first data packet sent by a first terminal device comprises:
   transmitting, by the second terminal device based on a first convergence identifier carried in a first PDU, the first PDU to the PDCP entity at the first adaptation layer, wherein the first PDU is a PDU of the first data packet at the PDCP layer of the first terminal device, and the first convergence identifier is used to indicate to perform data convergence for the first data packet on the target protocol layer entity.
Embodiment 22. The method according to any one of embodiments 16 to 20, wherein before the receiving, by a second terminal device through a first interface, a first data packet sent by a first terminal device, the method further comprises:
   receiving, by the second terminal device, first configuration information sent by a network device, wherein the first configuration information is used to configure the first terminal device to transmit the first data packet through the first interface and transmit the second data packet through the second interface.
Embodiment 23. The method according to embodiment 19, wherein a first convergence layer and a second routing layer are configured in the second terminal device, and the target protocol layer entity is a first convergence entity at the first convergence layer; and
   the receiving, by the second terminal device through a second interface, a second data packet sent by the first terminal device comprises:
   obtaining, by the second terminal device, a third PDU from a PDCP layer of the second terminal device, wherein the third PDU is a PDU of the second data packet at a PDCP layer of the first terminal device;
   decapsulating, by the second terminal device at the second routing layer, the third PDU that carries a second routing header, and transmitting the third PDU to the first convergence entity, wherein the second routing header is used to indicate a path for transmitting the second data packet; and
   converging, by the second terminal device, the second data packet at the first convergence layer through the first convergence entity.
Embodiment 24. The method according to embodiment 23, wherein a second adaptation layer is configured in the second terminal device; and
   the receiving, by a second terminal device through a first interface, a first data packet sent by a first terminal device comprises:
   obtaining, by the second terminal device, a fourth PDU from the PDCP layer of the second terminal device, wherein the fourth PDU is a PDU of the first data packet at the PDCP layer of the first terminal device;
   transmitting, by the second terminal device at the second adaptation layer, the fourth PDU to the first convergence entity based on a third convergence identifier carried in the fourth PDU, wherein the third convergence identifier is used to indicate a data flow to which the first data packet belongs; and
   performing, by the second terminal device, data convergence on the first data packet at the first convergence layer through the first convergence entity.
Embodiment 25. The method according to embodiment 23, wherein before the receiving, through a first interface, a first data packet transmitted by a first terminal device, the method further comprises:
   receiving, by the second terminal device, second configuration information sent by a network device, wherein the second configuration information is used to configure the first terminal device to transmit the first data packet through the first interface and transmit the second data packet through the second interface.
Embodiment 26. A first terminal device, comprising modules configured to perform the method according to any one of embodiments 1 to 15.
Embodiment 27. A second terminal device, comprising modules configured to perform the method according to any one of embodiments 16 to 25.
Embodiment 28. A communications device, wherein the communications device comprises at least one processor and a communications interface, the communications interface is used by the communications device to exchange information with another communications device, and when a program instruction is executed by the at least one processor, the communications device is enabled to implement a function of the first terminal device or the second terminal device in the method according to any one of embodiments 1 to 25.
Embodiment 29. A computer program storage medium, wherein the computer program storage medium comprises a program instruction, and when the program instruction is directly or indirectly executed, a function of the first terminal device or the second terminal device in the method according to any one of embodiments 1 to 25 is implemented.
Embodiment 30. A chip system, wherein the chip system comprises at least one processor, and when a program instruction is executed by the at least one processor, a function of the first terminal device or the second terminal device in the method according to any one of embodiments 1 to 25 is implemented.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, implemented by a first terminal device or a chip of the first terminal device, comprising:
transmitting, a first data packet to a second terminal device through a first interface, wherein the first interface is a communications interface for direct communication between the first terminal device and the second terminal device in a long term evolution, LTE, standard; and
transmitting, a second data packet to the second terminal device through a second interface, wherein the second interface is the communications interface for direct communication between the first terminal device and the second terminal device in the NR standard.

2. The method according to claim 1, wherein the first data packet and the second data packet are a same data packet in one data flow.

3. The method according to claim 1, wherein the first data packet and the second data packet are different data packets in one data flow.

4. The method according to any one of claims 1 to 3, wherein the first data packet and the second data packet are converged by a same target protocol layer entity in the second terminal device.

5. The method according to any one of claims 1 to 4, wherein a first routing layer is configured in the first terminal device, and the first routing layer is located between a packet data convergence protocol PDCP layer of the first terminal device and a radio link control RLC protocol layer of the first terminal device; and
before the transmitting, a second data packet to the second terminal device through a second interface, the method further comprises:
adding, a first routing header to a second protocol data unit PDU at the first routing layer, wherein the second PDU is a PDU of the second data packet at the PDCP layer of the first terminal device, and the first routing header is used to indicate a path for transmitting the second data packet.

6. The method according to claim 5, wherein a first adaptation layer is configured in the first terminal device, and the first adaptation layer is located between the PDCP layer of the first terminal device and the RLC layer of the first terminal device; and
before the transmitting, a first data packet to a second terminal device through a first interface, the method further comprises:
adding, a first convergence identifier to a first PDU at the first adaptation layer, wherein the first PDU is a PDU of the first data packet at the PDCP layer of the first terminal device, and the first convergence identifier is used to indicate to perform data convergence for the first data packet on the target protocol layer entity.

7. The method according to any one of claims 1 to 5, wherein before the transmitting a first data packet to a second terminal device through a first interface, the method further comprises:
receiving, first configuration information sent by a network device, wherein the first configuration information is used to configure the first terminal device to transmit the first data packet through the first interface and transmit the second data packet through the second interface.

8. The method according to claim 7, wherein the first configuration information carries at least one of the following indication information:
indication information used to indicate that a radio bearer corresponding to the first interface is the same as a radio bearer corresponding to the second interface;
indication information used to indicate that a destination address of the first data packet transmitted through the first interface is the same as a destination address of the second data packet transmitted through the second interface; or
indication information used to indicate that a logical channel corresponding to the first interface is the same as a logical channel corresponding to the second interface.

9. The method according to any one of claims 1 to 4, wherein a first convergence layer and a second routing layer are configured in the first terminal device; and
before the transmitting, a second data packet to the second terminal device through a second interface, the method further comprises:
obtaining, a third PDU from the first convergence layer, wherein the third PDU is a PDU of the second data packet at the first convergence layer;
adding, a second routing header to the third PDU at the second routing layer, wherein the third PDU is a PDU of the second data packet at the first convergence layer, and the second routing header is used to indicate a path for transmitting the second data packet; and
transmitting, to a PDCP layer of the first terminal device, the third PDU that carries the second routing header.

10. The method according to claim 9, wherein a second adaptation layer is configured in the first terminal device; and
before the transmitting, a first data packet to a second terminal device through a first interface, the method further comprises:
obtaining, a fourth PDU from the first convergence layer, wherein the fourth PDU is a PDU of the first data packet at the first convergence layer;
adding, a third convergence identifier to the fourth PDU at the second adaptation layer, wherein the third convergence identifier is used to indicate a data flow to which the first data packet belongs; and
transmitting, to the PDCP layer of the first terminal device, the fourth PDU that carries the third convergence identifier.

11. The method according to claim 9, wherein before the transmitting a first data packet to a second terminal device through a first interface, the method further comprises:
receiving, second configuration information sent by a network device, wherein the second configuration information is used to configure the first terminal device to transmit the first data packet through the first interface and transmit the second data packet through the second interface.

12. The method according to claim 11, wherein the second configuration information carries at least one of the following indication information:
indication information used to indicate that a radio bearer corresponding to the first interface is the same as a radio bearer corresponding to the second interface;
indication information used to indicate that a destination address of the first data packet transmitted through the first interface is the same as a destination address of the second data packet transmitted through the second interface; or
indication information used to indicate that a logical channel corresponding to the first interface is the same as a logical channel corresponding to the second interface.

13. A first terminal device, comprising modules configured to perform the method according to any one of claims 1 to 12.

14. A computer program storage medium, applied to a first terminal device, the computer program storage medium stores an instruction, wherein when the instruction executed, cause the first terminal device to perform the method according to any one of claims 1 to 12.

15. A chip system, applied to a first terminal device, the chip system comprises at least one processor, wherein when an instruction is executed by the at least one processor, cause the first terminal device to perform the method according to any one of claims 1 to 12.
